# EUROPEAN PATENT APPLICATION

(11) **EP 4 380 259 A1**
(43) Date of publication of application: **05.06.2024**
(21) Application number: 22872020.7
(22) Date of filing: 21.09.2022
(51) Int. Cl.: H04W 60/00

(54) **SENSING DEVICE REGISTRATION METHOD AND APPARATUS, AND DEVICE**

(30) Priority: 22.09.2021 CN 202111109354
(71) Applicant: Vivo Mobile Communication Co., Ltd., Dongguan, Guangdong 523863 (CN)
(72) Inventor: LI, Huan, Dongguan, Guangdong 523863 (CN); CHONG, Weiwei, Dongguan, Guangdong 523863 (CN)
(74) Representative: Murgitroyd & Company
(86) International application number: PCT/CN2022/120241
(87) International publication number: WO 2023/045974

(57) **Abstract**

This application discloses a sensing device registration method and apparatus, and a device, and belongs to the technical field of communications. The sensing device registration method provided by embodiments of this application includes: receiving, by an SF, first sensing device registration information sent by a first device, the first sensing device registration information being used for performing sensing device registration on a first sensing device, and the first sensing device including at least one of a sensing UE and a sensing RAN; and performing, by the SF according to the first sensing device registration information, sensing device registration on the first sensing device.

## Description

### CROSS-REFERENCE TO RELATED APPLICATION

This application claims the priority of Chinese Patent Application No. 202111109354.6 filed in China on September 22, 2021, the entire content of which is hereby incorporated by reference.

### TECHNICAL FIELD

This application belongs to the field of communication technology, and particularly relates to a sensing device registration method and apparatus, and a device.

### BACKGROUND

With the rapid development of the communication technology, the radar sensing technology has gradually developed towards the wireless sensing. Wireless sensing refers to sensing technologies and applications by means of radio signals. For example, information can be retrieved from the received radio signals rather than from communication data modulated to signals on a transmitter.

A sensing network side device is capable of providing mobile communication and wireless sensing services at the same time and can be widely used for communication and sensing in the fields of transportation, communication, energy, precision agriculture, and security due to its wide broadband coverage range and robust infrastructures.

In order to be able to execute the sensing service, the network side device needs to perform sensing configuration for sensing devices to make these sensing devices execute the sensing service. Therefore, how to make the network side device find the sensing devices has become a problem urgently to be solved.

### SUMMARY

Embodiments of this application provide a sensing device registration method and apparatus, and a device, thereby solving the problem about how to make a network side device find sensing devices.

According to a first aspect, a sensing device registration method is provided, the method including: receiving, by a sensing function (sensing function, SF), first sensing device registration information sent by a first device, the first sensing device registration information being used for performing sensing device registration on a first sensing device, and the first sensing device including at least one of a sensing UE and a sensing RAN; and performing, by the SF according to the first sensing device registration information, sensing device registration on the first sensing device.

According to the sensing device registration method provided by an embodiment of this application, since the SF, after receiving the first sensing device registration information, can perform sensing device registration on the first sensing device, i.e., the sensing capability of the first sensing device can be registered to a network side device, so that if it is required to perform a sensing service, the network side device may select a suitable sensing device from the registered sensing device to perform the sensing service.

According to a second aspect, a sensing device registration method is provided, the method including: sending, by a sensing user equipment (user equipment, UE), sensing capability indication information of the sensing UE to a sensing radio access network (radio access network, RAN) to make a network side device perform sensing device registration on the sensing UE, the sensing capability indication information of the sensing UE being used for indicating that the sensing UE has a sensing capability.

According to the sensing device registration method provided by an embodiment of this application, since the sensing capability indication information is used for indicating that the sensing UE has a sensing capability, i.e., indicating that the sensing UE is a sensing device, after the sensing UE sends the sensing capability information to the sensing RAN, if it is required to perform a sensing service, the network side device may select, according to the sensing capability indication information, a suitable sensing device to perform the sensing service.

According to a third aspect, a sensing device registration method is provided, the method including: sending, by a sensing RAN, first sensing device registration information to an SF, the first sensing device registration information being used for performing sensing device registration on a first sensing device, and the first sensing device including at least one of a sensing UE and the sensing RAN.

According to the sensing device registration method provided by an embodiment of this application, since the first sensing device registration information can be used for performing sensing device registration on the first sensing device, after the sensing RAN sends the first sensing device registration information to the SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

According to a fourth aspect, a sensing device registration method is provided, the method including: sending, by an access and mobility management function (access and mobility management function, AMF), first sensing device registration information to an SF, the first sensing device registration information being used for performing sensing device registration on a first sensing device, and the first sensing device including at least one of a sensing UE and a sensing RAN.

According to the sensing device registration method provided by an embodiment of this application, since the first sensing device registration information can be used for performing sensing device registration on the first sensing device, after the AMF sends the first sensing device registration information to an SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

According to a fifth aspect, a sensing device registration method is provided, the method including: sending, by a sensing UE, sensing device registration information of the sensing UE to an SF, the sensing device registration information of the sensing UE being used for performing sensing device registration on the sensing UE.

In some embodiments, the sensing device registration method as in the fifth aspect may further include: receiving, by the sensing UE, tunnel establishment parameters of a second sensing tunnel from an AMF; establishing, by the sensing UE according to the tunnel establishment parameters of the second sensing tunnel, the second sensing tunnel; and sending, by the sensing UE, second sensing device registration information to the SF, including: sending, by the sensing UE, the second sensing device registration information to the SF via the second sensing tunnel.

In some embodiments, the above second sensing tunnel may include any one of the following: a sensing bearer and a protocol data unit (protocol data unit, PDU) session.

In some embodiments, the sensing device registration method as in the fifth aspect may further include: sending, by the sensing UE, a registration request message to a sensing RAN; and receiving, by the sensing UE, a registration acceptance message, the registration acceptance message including information indicating that the sensing UE is permitted to perform a sensing service.

In some embodiments, the sensing device registration method as in the fifth aspect may further include: sending, by the sensing UE, sensing capability indication information to the sensing RAN, the sensing capability indication information being used for indicating that the sensing UE has a sensing capability.

In some embodiments, the sensing device registration method as in the fifth aspect may further include: sending, by the sensing UE, sensing request indication information to the sensing RAN, where the sensing request indication information may be used for requesting to use the sensing capability which the sensing UE has.

In some embodiments, the sensing device registration method as in the fifth aspect may further include: receiving, by the sensing UE, sensing configuration information of the sensing UE from the SF; executing, by the sensing UE according to the sensing configuration information of the sensing UE, first sensing measurement to obtain a first sensing measurement result; and reporting, by the sensing UE, the first sensing measurement result.

In some embodiments, reporting, by the sensing UE, the first sensing measurement result, includes: sending, by the sensing UE, a first message to the sensing RAN, the first message carrying the first sensing measurement result, and the first message being a non-access stratum (non-access stratum, NAS) message or an RRC message; or, sending, by the sensing UE, the first sensing measurement result to the sensing RAN by means of a first sensing tunnel, the first sensing tunnel being a sensing tunnel between the sensing UE and the sensing RAN; or, sending, by the sensing UE, the first sensing measurement result to the SF by means of a second sensing tunnel, the second sensing tunnel being a sensing tunnel between the sensing UE and the SF.

In some embodiments, the sensing device registration method as in the fifth aspect may further include: receiving, by the sensing UE, tunnel establishment parameters of the first sensing tunnel from the AMF; and establishing, by the sensing UE according to the tunnel establishment parameters of the first sensing tunnel, the first sensing tunnel; where the first sensing tunnel is a sensing radio bearer.

In some embodiments, the sensing configuration information includes at least one of the following:
a sensing service correlation ID;
sensing service description information;
a sensing device ID;
a sensing resource;
quality of service (QoS) registration information of the sensing service;
a trigger condition for the sensing service; and
reporting information of sensing measurement.

In some embodiments, the sensing capability includes at least one of the following:
a sensing measurement method;
a type of the sensing service;
a sensing purpose;
a sensing measurement signal; and
sensing measurement accuracy.

According to the sensing device registration method provided by an embodiment of this application, since the sensing UE can directly send the sensing device registration information of the sensing UE to the SF, so that the SF can perform sensing device registration on the sensing UE, after the sensing device is registered successfully, if it is required to perform a sensing service, a network side device may select a suitable sensing device from the registered sensing device to perform the sensing service.

According to a sixth aspect, a sensing device registration apparatus is provided, the apparatus including a sending module, the sending module being configured to send sensing capability indication information of a sensing UE to a sensing RAN to make a network side device perform sensing device registration on the sensing UE, the sensing capability indication information of the sensing UE being used for indicating that the sensing UE has a sensing capability.

According to a seventh aspect, a sensing device registration apparatus is provided, the apparatus including a receiving module and a registering module, the receiving module being configured to receive first sensing device registration information sent by a first device, the first sensing device registration information being used for performing sensing device registration on a first sensing device, and the first sensing device including at least one of a sensing UE and a sensing RAN; the registering module being configured to perform, according to the first sensing device registration information, sensing device registration on the first sensing device.

According to an eighth aspect, a sensing device registration apparatus is provided, the apparatus including a sending module, the sending module being configured to send first sensing device registration information to an SF, the first sensing device registration information being used for performing sensing device registration on a first sensing device, and the first sensing device including at least one of a sensing UE and a sensing RAN.

According to a ninth aspect, a sensing device registration apparatus is provided, the apparatus including a sending module, the sending module sending sensing device registration information of a sensing UE to an SF, the sensing device registration information of the sensing UE being used for performing sensing device registration on the sensing UE.

According to a tenth aspect, a UE is provided, the UE including a processor, a memory, and a program or instructions stored in the memory and executable on the processor, where when the program or instructions are executed by the processor, steps of the method according to the first aspect are implemented.

According to an eleventh aspect, a UE is provided, the UE including a processor and a communication interface, where the communication interface is configured to send sensing capability indication information of a sensing UE to a sensing RAN to make a network side device perform sensing device registration on the sensing UE; or the communication interface is configured to send sensing device registration information of the sensing UE to an SF.

According to a twelfth aspect, a network side device is provided, the network side device including a processor, a memory, and a program or instructions stored in the memory and executable on the processor, where when the program or instructions are executed by the processor, steps of the method according to the second aspect, the third aspect or the fourth aspect are implemented.

According to a thirteenth aspect, a network side device is provided, the network side device including a processor and a communication interface, where the communication interface is configured to receive first sensing device registration information sent by a first device, and the processor is configured to perform, according to the first sensing device registration information, sensing device registration on a first sensing device. Or, the communication interface is configured to send the first sensing device registration information to an SF.

According to a fourteenth aspect, a readable storage medium is provided, where a program or instructions are stored on the readable storage medium, and when the program or instructions are executed by a processor, steps of the method according to the first aspect, the second aspect, the third aspect, the fourth aspect, or the fifth aspect are implemented.

According to a fifteenth aspect, a chip is provided, the chip including a processor and a communication interface, the communication interface being coupled to the processor, and the processor being configured to run programs or instructions to implement steps of the method according to the first aspect, the second aspect, the third aspect, the fourth aspect, or the fifth aspect.

According to a sixteenth aspect, a computer program/program product is provided, the computer program/program product being stored in a non-transient storage medium, and the program/program product being executed by at least one processor to implement steps of the method according to the first aspect, the second aspect, the third aspect, the fourth aspect, or the fifth aspect.

### BRIEF DESCRIPTION OF THE DRAWINGS

FIG. 1 is a schematic diagram of a wireless communication system provided by an embodiment of this application;
FIG. 2 is a flowchart I of a sensing device registration method provided by an embodiment of this application;
FIG. 3 is a flowchart II of a sensing device registration method provided by an embodiment of this application;
FIG. 4 is a flowchart III of a sensing device registration method provided by an embodiment of this application;
FIG. 5 is a flowchart IV of a sensing device registration method provided by an embodiment of this application;
FIG. 6 is a flowchart V of a sensing device registration method provided by an embodiment of this application;
FIG. 7 is a flowchart I of application of a sensing device registration method provided by an embodiment of this application;
FIG. 8 is a flowchart II of application of a sensing device registration method provided by an embodiment of this application;
FIG. 9 is a flowchart III of application of a sensing device registration method provided by an embodiment of this application;
FIG. 10 is a flowchart IV of application of a sensing device registration method provided by an embodiment of this application;
FIG. 11 is a schematic structural diagram I of a sensing device registration apparatus provided by an embodiment of this application;
FIG. 12 is a schematic structural diagram II of a sensing device registration apparatus provided by an embodiment of this application;
FIG. 13 is a schematic diagram of hardware of a communication device provided by an embodiment of this application;
FIG. 14 is a schematic diagram of hardware of a UE provided by an embodiment of this application; and
FIG. 15 is a schematic diagram of hardware of a network side device provided by an embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

In the specification and claims of this application, terms "first" and "second" are used to distinguish similar objects, but are unnecessarily used to describe a specific sequence or order. It is to be understood that terms used in this way are exchangeable in a proper case, so that the embodiments of this application can be implemented in an order different from the order shown or described herein, and the objects distinguished by "first" and "second" are usually of one type, and there is no limit to the number of objects, for example, the first object may be one or more than one. In addition, "and/or" used in this specification and the claims represents at least one of the connected objects, and the character "/" generally indicates an "or" relationship between the objects associated in the context.

It is to be noted that the technologies described in the embodiments of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application, and the technologies described may be used for both the systems and radio technologies mentioned above, as well as for other systems and radio technologies. The following description describes a new radio (NR) system for exemplary purposes and uses the term NR for much of the following description, however, these technologies may also be used in applications other than applications of the NR system, such as 6th generation (6th Generation, 6G) communication systems.

First, terms/nouns involved in the embodiments of this application are exemplarily described below.

Sensing device: it means a device having a sensing capability, or a device serving a device having a sensing capability. For example, a sensing UE in the embodiments of this application refers to a UE having a sensing capability, and a sensing RAN refers to a RAN having a sensing capability or a RAN serving the sensing UE. The sensing device may send radio signals or measure received radio signals so as to detect a specific event in the surrounding environment, thereby accomplishing a sensing task (service), such as map measurement, health monitoring, etc.,

It should be noted that: the RAN serving the sensing UE may or may not have a sensing capability, which is not limited in the embodiments of this application.

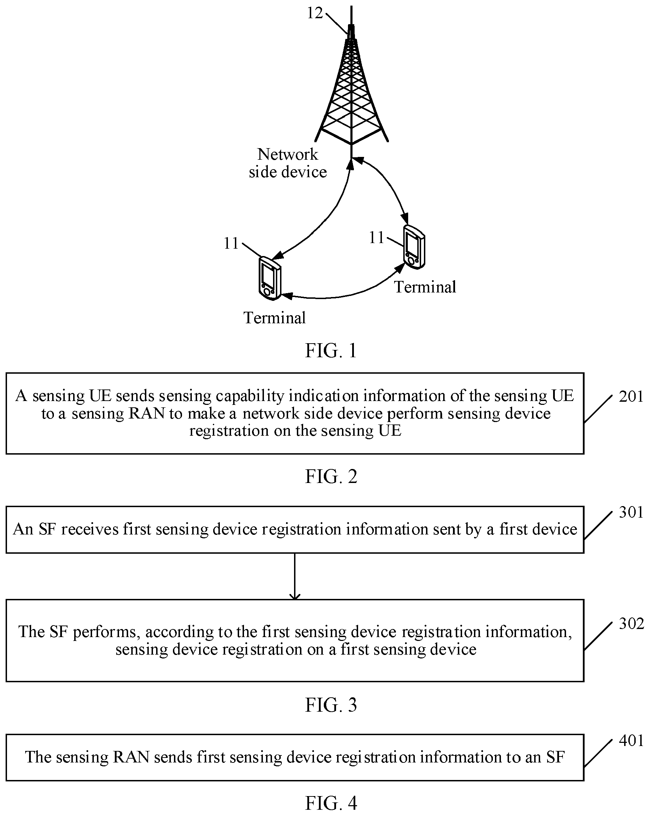

FIG. 1 is a block diagram of a wireless communication system to which embodiments of this application are applicable. The wireless communication system includes UEs 11 and a network side device 12. The UE 11 may be a mobile phone, a tablet personal computer (Tablet Personal Computer), a laptop computer (Laptop Computer) or a notebook computer, a personal digital assistant (Personal Digital Assistant, PDA), a palmtop, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), or vehicle user equipment (Vehicle User Equipment, VUE), pedestrian user equipment (Pedestrian User Equipment, PUE), a smart home device (a home device with a wireless communication function, such as a refrigerator, a television set, a washing machine, or furniture) and other UE side devices. The wearable device includes: smart watches, smart bracelets, smart headphones, smart glasses, smart jewelry (smart bracelets, smart brace laces, smart rings, smart necklaces, smart anklets, smart anklets, etc.), smart wristbands, smart clothing, gaming consoles, and the like. It should be noted that: the specific type of the UE 11 is not limited in the embodiments of this application. The network side device 12 may include a radio access network (RAN, which may also be referred to as a base station) and a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a household node B, a household evolved node B, a WLAN access point, a WiFi node, a transmitting receiving point (Transmitting Receiving Point, TRP) or some other suitable terms in the field as long as the same technical effect is achieved, the base station is not limited to a specific technical word, it is to be noted that: only a base station in the NR system is used as an example in the embodiments of this application, but the specific type of the base station is not limited. The core network may include an access and mobility management function (Access and Mobility Management Function, AMF), which provides services such as mobility management, registration and the like for the terminal. In the embodiments of this application, the core network may also include a sensing function (Sensing Function, SF).

The sensing device registration method provided by the embodiment of this application is exemplarily described below by means of some embodiments and the application scenarios thereof in conjunction with the attached drawings.

As shown in FIG. 2, an embodiment of this application provides a sensing device registration method, the method may be applied to the communication system as shown in FIG. 1, and the method may include step 201 as described below.

Step 201: A sensing UE sends sensing capability indication information of the sensing UE to a sensing RAN to make a network side device perform sensing device registration on the sensing UE.

The sensing capability indication information of the sensing UE may be used for indicating that the sensing UE has a sensing capability.

In the embodiment of this application, the sensing UE may send the above sensing capability indication information of the sensing UE to the sensing RAN, so that after the sensing RAN receives the sensing capability indication information of the sensing UE, the sensing RAN may send the sensing capability indication information of the sensing UE to an AMF. After the AMF receives the sensing capability indication information of the sensing UE, the AMF may determine whether the sensing UE is permitted to perform a sensing service. If the sensing UE is permitted to perform the sensing service, then the AMF may send first sensing device registration information to an SF so as to perform sensing device registration on the sensing UE, thereby making the network side device perform sensing device registration on the sensing UE.

Optionally, in the embodiment of this application, the sensing RAN may carry the sensing capability indication information of the sensing UE in an N2 message and send same to the AMF, thereby making the network side device perform sensing device registration on the sensing RAN.

Optionally, the sensing RAN may also carry the sensing capability indication information of the sensing RAN in the N2 message.

It should be noted that: the above sensing RAN may be a RAN serving the sensing UE. The RAN serving the sensing UE may be a sensing RAN, i.e., having a sensing capability, or may not have a sensing capability. The embodiment of this application is illustrated as an example of having a sensing capability. Optionally, if the RAN serving the sensing UE has a sensing capability, the sensing capability indication information of the RAN may be carried in the N2 message, and if the RAN serving the sensing UE does not have a sensing capability, the sensing capability indication information of the RAN will not be carried in the N2 message.

Optionally, in the embodiment of this application, the above sensing capability indication information may also be used for indicating a sensing capability which a sensing device (e.g., a sensing UE and/or a sensing RAN) has, and the sensing capability may include at least one of the following:
A: a sensing measurement method, the sensing measurement method of the sensing UE may include at least one of the following: the sensing UE sends a measurement signal and also receives the measurement signal to perform measurement, another UE sends a measurement signal and the sensing UE receives the measurement signal to perform measurement, the sensing RAN sends a measurement signal and the sensing UE receives the measurement signal to perform measurement, and the sensing UE sends a measurement signal and the sensing RAN receives the measurement signal to perform measurement. The sensing measurement method of the sensing RAN may include at least one of the following: the sensing RAN sends a measurement signal and also receives the measurement signal to perform measurement, another RAN sends a measurement signal and the sensing RAN receives the measurement signal to perform measurement, the sensing RAN sends a measurement signal and the sensing UE receives the measurement signal to perform measurement, and the sensing UE sends a measurement signal and the sensing RAN receives the measurement signal to perform measurement.
   "Send" refers to sending a measurement signal, and "receive" refers to receiving the measurement signal to perform measurement.
B: A type of the sensing service, the type of the sensing service may include at least one of the following: a wide sensing range and a high real-time requirement; a wide sensing range and a low real-time requirement; a narrow sensing range and a high real-time requirement; and a narrow sensing range and a low real-time requirement;
   Optionally, the above type of the sensing service may be indicated by numbers, letters or other character strings. The type of the sensing service may be specifically determined according to the actual use requirements, which is not limited in the embodiment of this application.
C: A sensing purpose, the sensing purpose refers to an application scenario of the sensing device (e.g., a sensing UE and/or a sensing RAN) in the sensing service, and may include one or more scenarios supported by the sensing device that require the sensing service, such as respiration monitoring, monitoring of the surrounding traffic environment, and the like.
D: A sensing measurement signal, the sensing measurement signal is used to indicate a signal supported by the sensing device and used for sensing measurement. The signal may include at least one of the following: a reference signal received power (reference signal received power, RSRP), reference signal received quality (reference signal received quality, RSRQ), a multipath angle of arrival, a multipath angle of departure, a multipath time delay, and a Doppler frequency.
E: A sensing measurement accuracy, the sensing measurement accuracy may include at least one of a sensing resolution and a sensing error.

Optionally, in the embodiment of this application, the above step 201 may be specifically realized by step 201a or step 201b as described below.

Step 201a: The sensing UE sends a registration request message to the sensing RAN, the registration request message including sensing capability indication information.

The registration request message is a message indicating that the sensing UE requests to be registered to the network side device.

Step 201b: The sensing UE sends a radio resource control (RRC) message to the sensing RAN, the RRC message including the sensing capability indication information.

Optionally, the RRC message may also include a registration request message. Optionally, the registration request message may further include the above sensing capability indication information of the sensing UE.

In the embodiment of this application, after the sensing UE sends the above registration request message to the sensing RAN, the sensing RAN may forward the registration request message to the AMF, thereby making the sensing UE be registered to the network side device. After the AMF receives the registration request message, the AMF may send a registration acceptance message to the sensing RAN, and the sensing RAN may forward the registration acceptance message to the sensing UE, thereby making the sensing UE receive the registration acceptance message sent by the AMF.

It should be noted that: after step 201a or 201b, the AMF receives the sensing capability indication information of the sensing UE, then the AMF may learn that the sensing UE has a sensing capability. After step 201b, the RAN may learn that the sensing UE has a sensing capability.

Optionally, in the embodiment of this application, after the AMF receives the above sensing capability indication information of the sensing UE, the AMF may determine whether the sensing UE is permitted to perform the sensing service, and indicate whether the sensing UE is permitted to perform the sensing service by means of the above registration acceptance message.

It should be noted that: relevant description about how the AMF determines whether the sensing UE is permitted to perform the sensing service will be described in embodiments below and will not be described in detail herein.

Based on this, in the embodiment of this application, after the above step 201a, the sensing device registration method provided by the embodiment of this application may further include step 202 as described below.

Step 202: The sensing UE receives the registration acceptance message.

The registration acceptance message may include information indicating that the sensing UE is permitted to perform the sensing service.

Of course, during practical implementation, the above registration acceptance message may also include information indicating that the sensing UE is not permitted to perform the sensing service. If the sensing UE is not permitted to perform the sensing service, then the network side device will not perform sensing device registration on the sensing UE.

Optionally, the sensing device registration method provided by the embodiment of this application may further include step 203 as described below.

Step 203: The sensing UE sends sensing request indication information to the sensing RAN.

The above sensing request indication information may be used for requesting to use a sensing capability which the sensing UE has.

In one possible implementation, after the network side device receives the sensing capability indication information of the sensing UE and the sensing request indication information, if the sensing UE is permitted to perform the sensing service, then the network side device may perform sensing device registration on the sensing UE, i.e., the network side device executes a sensing device registration process of the sensing UE.

It can be understood that in the above implementation, if the network side device does not receive the above sensing request indication information, then the network side device may determine that the sensing UE is not expected to perform the sensing service, and thus the network side device may not perform sensing device registration on the sensing UE.

Optionally, in the embodiment of this application, the above sensing request indication information may be carried in the RRC message or the registration request message together with the sensing capability indication information of the sensing UE to be sent to the RAN. The RAN may carry the sensing request indication information together with the sensing capability indication information of the sensing UE in the N2 message to be sent to the AMF.

Optionally, in the embodiment of this application, after the network side device performs sensing device registration on the sensing UE, if it is required to execute the sensing service, then the network side device may send sensing configuration information of the sensing UE to the sensing UE, thereby making the sensing UE perform sensing measurement and report the corresponding sensing measurement result.

Based on this, the sensing device registration method provided by the embodiment of this application may further include steps 204-206 as described below.

Step 204: The sensing UE receives sensing configuration information of the sensing UE from the sensing RAN.

Step 205: The sensing UE performs, according to the sensing configuration information of the sensing UE, first sensing measurement to obtain a first sensing measurement result.

Step 206: The sensing UE reports the first sensing measurement result.

In the embodiment of this application, the sensing RAN may send the sensing configuration information of the sensing UE received from the network side device to the sensing UE, so that after the sensing UE receives the sensing configuration information, the sensing UE may perform the above first sensing measurement to obtain the above first sensing measurement result. The sensing UE may then report the first sensing measurement result to the network side device.

Optionally, in the embodiment of this application, the above sensing configuration information may include at least one of the following:
a sensing service correlation identifier (Sensing service correlation ID), where the sensing service correlation ID may be used to identify a session of a sensing service, and the sensing service ID may be assigned by the SF;
sensing service description (sensing service description) information, where the sensing service description information may include a strategy which the SF formulates for the sensing service and control information, and may for example include at least one of the following: a sensing measurement method, a sensing service, a sensing purpose, a sensing measurement signal, and sensing measurement accuracy;
a sensing device ID, where the sensing device ID may be used to indicate a sensing device (e.g., a sensing UE and/or a sensing RAN) participating in sensing signal measurement optionally, the sensing device ID may include at least one of a sensing RAN ID and a sensing UE ID;
a sensing resource;
quality of service (Quality of Service QoS) registration information of the sensing service, where the QoS registration information of the sensing service may include at least one of a bandwidth configuration, a priority configuration, and an accuracy configuration;
a trigger condition for the sensing service; and
reporting information (reporting information) of sensing measurement.

Optionally, in the embodiment of this application, the sensing UE may report the above first sensing measurement result in different ways. In this way, the above step 206 may be realized by step 206a, step 206b or step 206c as described below.

Step 206a: The sensing UE sends a first message to the sensing RAN, where the first message carries the first sensing measurement result.

The first message may be a non-access stratum (non-access stratum, NAS) message or an RRC message.

As a possible implementation, the above first message is a NAS message. The sensing UE may send the NAS message (carrying the first sensing measurement result) to the sensing RAN, and upon receipt of the NAS message by the sensing RAN, the NAS message may be carried in the N2 message and sent to the AMF, so that the AMF may forward the above first sensing measurement result to the SF. In this way, the first sensing measurement result obtained from the sensing measurement performed by the sensing UE is made to be reported to the network side device.

As a possible implementation, the above first message is an RRC message. The sensing UE may send the RRC message (carrying the first sensing measurement result) to the sensing RAN, and upon receipt of the RRC message by the sensing RAN, the sensing RAN may carry the first sensing measurement result in the RRC message in the N2 message to send same to the AMF, so that the AMF may forward the above first sensing measurement result to the SF. In this way, the first sensing measurement result obtained from the sensing measurement performed by the sensing UE is made to be reported to the network side device.

Optionally, when the sensing RAN sends the above first sensing measurement result to the AMF via the N2 message, the sensing RAN may also carry the sensing measurement result of the sensing RAN in the N2 message to report same to the AMF. The AMF may then forward the received sensing measurement result of the sensing UE and/or the sensing measurement result of the sensing RAN to the SF.

Step 206b: The sensing UE sends the first sensing measurement result to the sensing RAN via the first sensing tunnel.

The first sensing tunnel may be a sensing tunnel between the sensing UE and the sensing RAN.

In the embodiment of this application, the sensing UE may send the above first sensing measurement result to the sensing RAN via the above first sensing tunnel. After the RAN receives the first sensing measurement result, the RAN may send the first sensing measurement result to the SF.

It should be noted that: in the embodiment of this application, the sensing RAN may transmit messages/information/data to the SF via the AMF. In addition, the interaction mode between the sensing RAN and the SF will be described in detail in the following embodiments and will not be repeated here.

Optionally, in the embodiment of this application, before the above step 206b, the sensing device registration method provided by the embodiment of this application may further include step 207 and step 208 as described below.

Step 207: The sensing UE receives tunnel establishment parameters of the first sensing tunnel from the AMF.

Step 208: The sensing UE establishes, according to the tunnel establishment parameter of the first sensing tunnel, the first sensing tunnel.

The above first sensing tunnel is a sensing radio bearer, and the tunnel establishment parameters of the first sensing tunnel may be parameters of the sensing radio bearer.

Optionally, the tunnel establishment parameters of the first sensing tunnel may include at least one of a data network name (data network name, DNN), single network slice selection assistance information (single network slice selection assistance information, S-NSSAI), and a QoS parameter.

Optionally, in the embodiment of this application, the AMF may carry the above parameters of the sensing radio bearer in the registration acceptance message to send same to the sensing RAN, and the sensing RAN then forwards same to the sensing UE. Thus, the sensing UE may establish, according to the parameters of the sensing radio bearer, the sensing radio bearer. In this way, after the UE obtains the above first sensing measurement result, the sensing UE may send the first sensing measurement result to the sensing RAN by means of the sensing radio bearer.

Step 206c: The sensing UE sends the first sensing measurement result to the SF via the second sensing tunnel.

The above second sensing tunnel may be a sensing tunnel between the sensing UE and the SF.

Optionally, in the embodiment of this application, before the above step 206c, the sensing device registration method provided by the embodiment of this application may further include step 209 and step 210 as described below.

Step 209: The sensing UE receives tunnel establishment parameters of the second sensing tunnel from the AMF.

Step 210: The sensing UE establishes, according to the tunnel establishment parameters of the second sensing tunnel, the second sensing tunnel.

The second sensing tunnel includes any one of the following: a sensing bearer and a sensing PDU session.

It can be understood that the above tunnel establishment parameters of the second sensing tunnel may be parameters of the sensing bearer or parameters of the sensing PDU session.

Optionally, the parameters of the sensing bearer or the parameters of the sensing PDU session may include at least one of a data network name (data network name, DNN), single network slice selection assistance information (single network slice selection assistance information, S-NSSAI), a QoS parameter, and an address of the SF.

Optionally, in the embodiment of this application, the AMF may carry the above parameters of the sensing bearer or the parameters of the sensing PDU session (i.e., the tunnel establishment parameters of the second sensing tunnel) in the registration acceptance message to send same to the sensing RAN, and the sensing RAN then forwards same to the sensing UE. Thus, the sensing UE may establish, according to the parameters of the sensing bearer or the parameters of the sensing PDU session, the sensing bearer or the sensing PDU session. In this way, after the UE obtains the above first sensing measurement result, the sensing UE may send the first sensing measurement result to the SF via the sensing bearer or the sensing PDU session.

It is to be noted that, in the embodiment of this application, if the UE does not have the sensing capability, the UE will not send the sensing capability indication information to the RAN. If the RAN has the sensing capability, the RAN may still send the sensing capability indication information to the AMF via the N2 message in step 201, indicating that the RAN has the sensing capability. After receiving the sensing capability indication information of the RAN, the AMF may send the first sensing device registration information to the SF to register the sensing RAN into the SF, thereby making the network side device select a suitable sensing RAN to perform the sensing service when it is required to perform the sensing service.

In the embodiment of this application, since the sensing capability indication information is used to indicate that the sensing UE has a sensing capability, i.e., indicate that the sensing UE is a sensing device, after the sensing UE sends the sensing capability information to the sensing RAN, the network side device, in the case of determining that the sensing UE is a sensing device, can perform sensing device registration on the sensing UE, thereby, when it is required to perform the sensing service, the network side device can select a suitable sensing UE to perform the sensing service.

As shown in FIG. 3, an embodiment of this application provides a sensing device registration method, the method may be applied to the wireless communication system as shown in FIG. 1, and the method may include step 301 and step 302 as described below.

Step 301: An SF receives first sensing device registration information sent by a first device.

The above first sensing device registration information may be used to perform sensing device registration on a first sensing device, and the first sensing device may include at least one of a sensing UE and a sensing RAN.

It can be understood that the above first sensing device registration information may include at least one of the sensing device registration information of the sensing UE and the sensing device registration information of the sensing RAN.

Step 302: The SF performs, according to the first sensing device registration information, sensing device registration on the first sensing device.

In the embodiment of this application, after the SF receives the above first sensing device registration information, the SF may perform, according to the first sensing device registration information, sensing device registration on the first sensing device, so that the first sensing device can perform the sensing service after the sensing device registration is completed.

Optionally, in the embodiment of this application, the above first sensing device registration information may include at least one of the following:
an ID of the sensing UE;
a sensing capability of the sensing UE;
location information of the sensing UE;
an ID of the sensing RAN;
a sensing capability of the sensing RAN; and
location information of the sensing RAN.

It should be noted that: in the case that the above first sensing device includes the sensing UE, the first sensing device registration information may include at least one of the ID, the sensing capability and the location information of the sensing UE, and the ID, the sensing capability and the location information of the RAN serving the sensing UE. In the case where the first sensing device includes the sensing RAN, the first sensing device registration information may include at least one of the ID, the sensing capability and the location information of the sensing RAN.

Optionally, in the embodiment of this application, the ID of the sensing UE may include at least one of the following: an international mobile subscriber identity (international mobile subscriber identity, IMSI), an international mobile equipment identification (international mobile equipment identification, IMEI), a media access control (media access control, MAC) address, a cell phone number, and a subscription concealed identifier (subscription concealed identifier, SUCI). The ID of the sensing RAN may include at least one of the following: a fully qualified domain name (fully qualified domain name, FQDN), an ID, an MAC address, a UE temporary ID, and identification information on an N2 interface for identifying the sensing UE, e.g., a gNB next generation application protocol (NGAP) ID and an AMF NGAP ID.

Optionally, in the embodiment of this application, the above location information may include at least one of the following: a tracking area identity (tracking area identity, TAI), a cell identity (cell identity, cell ID), and a geographic location. Of course, during actual implementation, the location information may also include any other possible information, which may be determined according to the actual use requirements, and is not limited in the embodiment of this application.

Optionally, the sensing device registration method provided by the embodiment of this application may further include steps 303-305 as described below.

Step 303: The SF receives the sensing service information.

Optionally, in the embodiment of this application, the method of receiving the sensing service information by the SF may include two possible methods of realization, namely, method I and method II. The two methods are exemplarily described below, respectively.

Method I: An application function (application function, AF) sends a sensing service request message to the SF. Optionally, the application function (AF) may send the sensing service request message to the SF via a network exposure function (network exposure function, NEF).

Method II: A consumer (consumer) UE (i.e., a UE which expects the sensing service) directly sends the sensing service request message to the SF.

It should be noted that: in the embodiment of this application, the sensing service request message carries the description information of the sensing service (i.e., the above sensing service information), so that the SF can receive the sensing service information.

Step 304: The SF determines, according to the sensing service information, that the first sensing device is a sensing device participating in the sensing service indicated by the sensing service information.

Step 305: The SF sends first sensing configuration information to the first device.

The above first sensing configuration information may be sensing configuration information of the first sensing device.

It should be noted that: the relevant description of the sensing configuration information can specifically refer to the detailed description of the sensing configuration information in the above embodiment, and in order to avoid repetition, it will not be repeated herein.

In the embodiment of this application, after the SF receives the sensing service information, the SF may determine, according to the sensing service information, a sensing device (i.e., the above first sensing device) that parameterizes the sensing service indicated by the sensing service information, and then the SF may send the first sensing configuration information corresponding to the sensing service to the first device, so that the first device forwards the first sensing configuration information to the sensing device participating in the sensing service.

Optionally, in the embodiment of this application, the above first device may be any one of the following: the sensing UE, the sensing RAN and the AMF.

It should be noted that: in the embodiment of this application, when the above first sensing device includes the sensing UE, the SF may send the above first sensing configuration information to the sensing UE, or send the above first sensing configuration information to the sensing UE by means of the AMF and the sensing RAN, and when the above first sensing device includes the sensing RAN, the SF may send the first sensing configuration information to the sensing RAN or send the first sensing configuration information to the sensing RAN by means of the AMF.

Exemplarily, in the embodiment of this application, in the case where the above first sensing device includes the sensing UE and the sensing RAN, the first device may be the AMF, so that the SF may transmit the above first sensing configuration information to the AMF by invoking a sensing configuration transfer (sensing configuration transfer) service of the AMF; The AMF may carry the first sensing configuration information in the N2 message and send same to the sensing RAN. After the sensing RAN receives the N2 message, the sensing RAN may carry the sensing configuration information of the sensing UE in the first sensing configuration message in the RRC message and send same to the sensing UE.

Also exemplarily, in the embodiment of this application, in the case where the above first sensing device includes the sensing UE and the sensing RAN, the first device may be the AMF, so that the SF may transmit the above first sensing configuration information to the AMF by invoking a sensing configuration transfer (sensing configuration transfer) service of the AMF. The AMF may carry the sensing configuration information of the sensing RAN in the first sensing configuration information in the N2 message and send same to the sensing RAN, and carry the sensing configuration information of the sensing UE in the first sensing configuration information in the NAS message and send same to the UE via the RAN.

Also exemplarily, in the case where the above first sensing device includes the sensing UE, the first device may be the AMF, and after the SF sends the above first sensing configuration information (i.e., the sensing configuration information of the UE) to the AMF, the AMF may carry the first sensing configuration information in the NAS message and send same to the sensing RAN, and the sensing RAN may forward the NAS message to the sensing UE, so that the sensing UE may receive the sensing configuration information of the sensing UE.

Further exemplarily, in the case where the above first sensing device includes the sensing UE, the first device may be the sensing UE, and the SF may directly send the sensing configuration information of the sensing UE to the sensing UE by means of the sensing tunnel between the SF and the sensing UE.

Optionally, in the embodiment of this application, the above step 304 may be realized by steps 304a-304 d as described below.

Step 304a: The SF determines, according to the sensing service information, a sensing region for performing the sensing service.

Step 304b: The SF sends an event exposure service request message to the AMF.

The above event exposure service request message may include indication information of the sensing region.

Step 304c: The SF receives an event exposure response message from the AMF.

Step 304d: The SF determines, according to the event exposure response message, that the first sensing device among devices indicated by the event exposure response message is a sensing device participating in the sensing service indicated by the sensing service information.

Optionally, in the embodiment of this application, the above device indicated by the event exposure response message may include at least one of the following:
a sensing device located in the sensing region;
a sensing device having a capability to provide a sensing service for the sensing region; and
a device located in the sensing region.

In the embodiment of this application, in the case where the device indicated by the event exposure response message includes the device located in the sensing region, after the SF receives the event exposure response message, the SF may determine, by combining the sensing capability indication information of the sensing UE and/or the sensing RAN stored in the SF with the event exposure response message, that the above first sensing device is a sensing device participating in the sensing service indicated by the sensing service information.

It can be understood that the above first sensing device may be at least one of the sensing device located in the sensing region, or the sensing device having the capability to provide a sensing service for the sensing region.

Optionally, in the embodiment of this application, in the case where the device indicated by the above event exposure response message includes the sensing device located in the sensing region (referred to as a target sensing device), the above event exposure response message may include an ID of the target sensing device, such as at least one of the sensing UE ID and the sensing RAN ID.

The sensing UE ID may include identification information on the N2 interface for identifying the sensing UE, such as at least one of a gNB next generation application protocol (Next Generation Application Protocol, NGAP) ID and an AMF NGAP ID.

Optionally, in the embodiment of this application, after the first sensing device receives corresponding sensing configuration information thereof, the first sensing device may perform sensing measurement according to the sensing configuration information, and report a sensing measurement result to the network side device after the sensing measurement is completed.

Based on this, the sensing device registration method provided by the embodiment of this application may further include step 306 as described below.

Step 306: The SF receives the second sensing measurement result from the second device.

The above second sensing measurement result may be a measurement result corresponding to a sensing service indicated by the sensing service information, and the second device may include at least one of the following: the sensing UE, the sensing RAN and the AMF.

Optionally, in the embodiment of this application, in the case where the second device includes the sensing UE and the first sensing device includes the sensing UE, the above step 306 may be carried executed by step 306a as described below.

Step 306a: The SF receives the second sensing measurement result from the sensing UE via the second sensing tunnel.

The second sensing tunnel is a sensing bearer or a sensing PDU session of the sensing UE.

The relevant description of the second sensing tunnel in the embodiment of this application can specifically refer to the relevant description of the second sensing tunnel in the above embodiment. In addition, the second sensing measurement result in the step 306a is equivalent to the first sensing measurement result in the above embodiment, and may refer to the detailed description of the first sensing measurement result, and in order to avoid repetition, it is not repeated herein.

Optionally, in the embodiment of this application, in the case where the second device includes the sensing RAN and the first sensing device includes the sensing UE, before the above step 306, the sensing device registration method provided by the embodiment of this application may further include step 307 as described below. The step 306 may be realized by step 306b as described below.

Step 307: The SF establishes a third sensing tunnel between the SF the sensing RAN.

Step 306b: The SF receives the second sensing measurement result from the sensing RAN by means of the third sensing tunnel.

The above third sensing tunnel may be a Ny tunnel at the granularity of the UE. In this way, message interaction or data interaction for the sensing UE may be executed between the SF and the sensing RAN by means of the Ny tunnel. During interaction, it is required to carry the identification information of the sensing UE on the Ny tunnel, such as at least one of identification information on the N2 interface for identifying the sensing UE, a SF NyAP ID, a RAN NyAP ID, RAN Ny tunnel info (tunnel info), and SF Ny tunnel info.

In the embodiment of this application, the SF NyAP ID and the SF Ny tunnel info are identifications of the SF that may be assigned by the SF to the sensing UE in the process of establishing the Ny tunnel. The RAN NyAP ID and the RAN Ny tunnel info may be identifications assigned by the sensing RAN to the sensing UE in the process of establishing the Ny tunnel.

Optionally, in the embodiment of this application, the above step 307 may be realized by step 307a and step 307b as described below, or realized by step 307c and step 307d as described below.

Step 307a: The SF receives an establishment request message of the third sensing tunnel from the sensing RAN.

In the embodiment of this application, the above establishment request message of the third sensing tunnel (e.g., a NyAP establishment request message) may include registration information of the sensing UE, such as at least one of the ID, the sensing capability and the location information of the sensing UE.

Step 307b: The SF sends an establishment response message of the third sensing tunnel to the sensing RAN.

After the SF receives the establishment request message of the third sensing tunnel, the SF may send an establishment response message of the third sensing tunnel (e.g., a NyAP establishment response message) to the sensing RAN. The establishment response message of the third sensing tunnel may include the RAN NyAP ID, and may also include an ID assigned by the SF for the UE, such as an SF NyAP ID.

Optionally, the establishment response message of the third sensing tunnel may also include tunnel info on the SF side, i.e., the SF Ny tunnel info.

It should be noted that: the SF may establish the above third sensing tunnel (e.g., a Ny tunnel of the granularity of the UE) with the sensing RAN via the AMF. That is, the establishment request message of the above third sensing tunnel and the establishment response message of the third sensing tunnel may be forwarded via the AMF.

Step 307c: The SF sends the establishment request message of the third sensing tunnel to the sensing RAN.

The establishment request message of the third sensing tunnel may include an ID of the RAN on the N2 interface for identifying the UE. Optionally, an SF NyAP ID may also be included. Optionally, tunnel info on the SF side, namely, the SF Ny tunnel info, may also be included. The ID of the RAN on the N2 interface for identifying the UE may enable the RAN to be used to determine the UE.

Step 307d: The SF receives the establishment response message of the third sensing tunnel from the sensing RAN.

The establishment response message of the third sensing tunnel may include at least one of the SF NyAP ID and the SF Ny tunnel info, and the establishment response message of the third sensing tunnel may include at least one of the ID of the RAN on the N2 interface for identifying the UE and the SF NyAP ID. Optionally, at least one of the RAN NyAP ID and the RAN Ny tunnel info may also be included.

It should be noted that: the SF NyAy ID may be the same as or different from the RAN NyAP ID. In the case that the SF NyAP ID may be the same as the RAN NyAP ID, it may appear only once in the establishment response message (e.g., a NyAP establishment response message) of the third sensing tunnel.

In the embodiment of this application, since the SF, after receiving the first sensing device registration information, can perform sensing device registration on the first sensing device, i.e., the sensing capability of the first sensing device can be registered to the network side device, so that if it is required to perform the sensing service, the network side device may select a suitable sensing device from the registered sensing device to perform the sensing service.

As shown in FIG. 4, an embodiment of this application provides a sensing device registration method, the method may be applied to the wireless communication system as shown in FIG. 1, and the method may include step 401 as described below.

Step 401: The sensing RAN sends the first sensing device registration information to the SF.

The above first sensing device registration information may be used to perform sensing device registration on the first sensing device, and the first sensing device may include at least one of a sensing UE and a sensing RAN.

It should be noted that: the relevant description of the first sensing device registration information can specifically refer to the detailed description of the first sensing device registration information in the above embodiment, and in order to avoid repetition, it will not be repeated herein.

Optionally, in the embodiment of this application, in the case where the first sensing device includes a sensing UE, the sensing device registration method provided by the embodiment of this application may further include step 402 as described below.

Step 402: The sensing RAN receives a first message from the AMF, where the first message includes information indicating that the sensing UE is permitted to perform a sensing service.

Optionally, in the embodiment of this application, before the sensing RAN sends the above first sensing device registration information to the SF, if the sensing RAN receives the above first message, then the sensing RAN may send the sensing device registration information of the UE to the SF. If the sensing RAN receives a second message that includes information indicating that the sensing UE is not permitted to perform the sensing service, then the sensing RAN may not send the sensing device registration information of the sensing UE to the SF, for example, only the sensing device registration information of the sensing RAN is sent.

Optionally, in the embodiment of this application, the above first message may be a registration acceptance message or an N2 message, which may be determined according to the actual use requirement, and is not limited in the embodiment of this application.

Optionally, in the embodiment of this application, in the case where the first sensing device includes a sensing UE, the sensing device registration method provided by the embodiment of this application may further include step 403 as described below.

Step 403: The sensing RAN receives the sensing capability indication information of the sensing UE from a third device.

The above sensing capability indication information of the sensing UE may be used to indicate that the sensing UE has a sensing capability, and the third device may include at least one of the AMF and the sensing UE.

Exemplarily, the sensing UE may directly send the sensing capability indication information of the sensing UE to the sensing RAN via an RRC message. Alternatively, the sensing UE may carry the sensing capability indication information of the sensing UE in the registration request message and send same to the AMF, and the AMF receives the registration request message, confirms that the sensing UE has the sensing capability, and sends the sensing capability indication information of the sensing UE parsed from the registration request message to the sensing RAN. Alternatively, the sensing UE sends a registration request message to the AMF, which does not carry the sensing capability indication information, and the AMF determines, according to subscription of the UE, that the UE has the sensing capability, and sends the sensing capability indication information to the sensing RAN, which indicates that the UE has the sensing capability. The type of the sensing service may be specifically determined according to the actual use requirements, which is not limited in the embodiment of this application.

It should be noted that: the relevant description of the sensing capability indication information of the sensing UE can specifically refer to the detailed description in the above embodiment, and in order to avoid repetition, it will not be repeated herein.

Optionally, in the embodiment of this application, after the sensing RAN sends the above first sensing device registration information to the SF, the SF may perform sensing device registration on the first sensing device. In this way, the SF may send the sensing configuration information of the first sensing device to the sensing RAN when there is a demand for the sensing service, so that the first sensing device can perform sensing measurement.

Based on this, the sensing device registration method provided by the embodiment of this application may further include step 404 as described below.

Step 404: The sensing RAN receives the first sensing configuration information from the SF.

The above first sensing configuration information may be sensing configuration information of the first sensing device.

It should be noted that: the relevant description of the sensing configuration information can specifically refer to the detailed description of the sensing configuration information in the above embodiment, and in order to avoid repetition, it will not be repeated herein.

Optionally, in the case where the first sensing device includes a sensing UE, the sensing device registration method provided by the embodiment of this application may further include steps 405-407 as described below.

Step 405: The sensing RAN sends the sensing configuration information of the sensing UE to the sensing UE.

Step 406: The sensing RAN receives a first sensing measurement result from the sensing UE.

Step 407: The sensing RAN sends the first sensing measurement result to the SF.

It should be noted that: the relevant description of the above sensing configuration information of the sensing UE and the first sensing measurement result can specifically refer to the detailed description in the above embodiment, and in order to avoid repetition, it will not be repeated herein.

Optionally, before the above step 407, the sensing device registration method provided by the embodiment of this application may further include step 408 as described below. The step 407 may be specifically realized by step 407a as described below.

Step 408: The sensing RAN establishes a third sensing tunnel with the SF.

Step 407a: The RAN sends the first sensing measurement result to the SF via the third sensing tunnel.

It should be noted that: the realization mode for that "the sensing RAN establishes a third sensing tunnel with the SF" described above, can specifically refer to the realization mode for that "the SF establishes a third sensing tunnel with the sensing RAN" in the above embodiment, and in order to avoid repetition, it will not be repeated herein.

Optionally, before the above step 405, the sensing device registration method provided by the embodiment of this application may further include step 409 as described below. The step 405 may be specifically realized by step 405a as described below.

Step 409: The sensing RAN establishes a first sensing tunnel.

The first sensing tunnel is a sensing radio bearer of the UE.

Step 405a, the sensing RAN sends sensing configuration information of the sensing UE to the sensing UE via the first sensing tunnel.

Optionally, in the case where the first sensing device includes a sensing RAN, after the sensing RAN receives the above first sensing configuration information, the sensing RAN may perform corresponding sensing measurement according to the sensing configuration information of the sensing RAN, and report the corresponding sensing measurement results to the SF.

Based on this, the sensing device registration method provided by the embodiment of this application may further include step 410 as described below and step 411 and step 412 as described below.

Step 411: The sensing RAN performs, according to the sensing configuration information of the sensing RAN, second sensing measurement to obtain a third sensing measurement result.

Step 412: The RAN sends the third sensing measurement result to the SF.

In the embodiment of this application, after the sensing RAN receives the sensing configuration information of the sensing RAN, the sensing RAN may execute the above second sensing measurement according to the sensing configuration information, so that the above third sensing measurement result may be obtained, and the third sensing measurement result is sent to the SF, i.e., the third sensing measurement result is reported to the network side device.

Optionally, in the embodiment of this application, the sensing RAN may send the above third sensing measurement result to the SF via the AMF. For example, the sensing RAN may carry the third sensing measurement result in the N2 message and send same to the AMF, and the AMF then sends the third sensing measurement result to the SF.

In the embodiment of this application, since the first sensing device registration information can be used for performing sensing device registration on the first sensing device, after the sensing RAN sends the first sensing device registration information to the SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

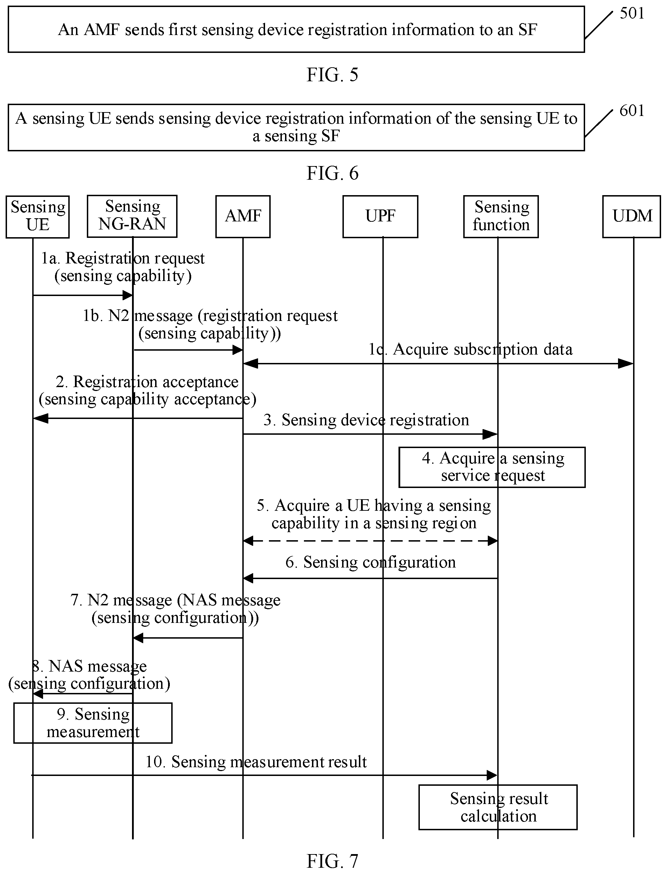

As shown in FIG. 5, an embodiment of this application provides a sensing device registration method, the method may be applied to the wireless communication system as shown in FIG. 1, and the method may include step 501 as described below.

Step 501: The AMF sends the first sensing device registration information to the SF.

The above first sensing device registration information may be used to perform sensing device registration on the first sensing device, and the first sensing device may include at least one of a sensing UE and a sensing RAN.

It should be noted that: in the embodiment of this application, the relevant description of the first sensing device registration information can specifically refer to the detailed description in the above embodiment, and in order to avoid repetition, it will not be repeated herein.

Optionally, in the case where the first sensing device includes a sensing UE, the AMF may first determine whether the sensing UE is permitted to perform the sensing service. If the UE is permitted to perform the sensing service, then the AMF may send the sensing device registration information of the sensing UE to the SF. If the UE is not permitted to perform the sensing service, then the AMF does not send the sensing device registration information of the sensing UE to the SF, for example, only the sensing device registration information of the sensing RAN is sent to the SF.

Based on this, the sensing device registration method provided by the embodiment of this application may further include step 502 as described below.

Step 502: The AMF determines, according to the first information, that the sensing UE is permitted to perform the sensing service.

The above first information may include at least one of a local configuration and subscription data of the sensing UE.

It should be noted that: the above local configuration may be configuration information of an operator.

Optionally, in the embodiment of this application, the AMF may obtain the subscription data of the sensing UE from a unified data management (UDM) entity, and determine, according to the subscription data, whether the sensing UE may perform the sensing service.

Optionally, the AMF may receive the first sensing capability indication information from the RAN, and after the AMF receives the first sensing capability indication information, the AMF may determine whether to send the sensing device registration information of the UE to the SF to make the network side device perform sensing device registration on the first sensing device.

Based on this, the sensing device registration method provided by the embodiment of this application may further include step 503 as described below.

Step 503: The AMF receives the first sensing capability indication information from the sensing RAN.

The first sensing capability indication information is used to indicate that the first sensing device has a sensing capability.

It can be understood that the above first sensing capability indication information may include at least one of the sensing capability indication information of the sensing UE and the sensing capability indication information of the sensing RAN.

Optionally, the sensing device registration method provided by the embodiment of this application may further include step 504 as described below.

Step 504: The AMF receives sensing request indication information from the sensing RAN.

The sensing request indication information is used for requesting to use the sensing capability which the sensing UE has.

It should be noted that: relevant description of the first sensing capability indication information, the sensing request indication information, and how the AMF receives the first sensing capability indication information and the sensing request indication information from the sensing RAN can specifically refer to the detailed description of step 201-step 210 in the above embodiment, and in order to avoid repetition, it will not be repeated here.

Optionally, in the embodiment of this application, after the network side device performs sensing device registration on the first sensing device, if it is required to perform a sensing service, the SF may send the sensing configuration information of the first sensing device to the AMF, and the AMF may forward the sensing configuration information of the first sensing device to the sensing RAN, so that the first sensing device may perform sensing measurement.

Based on this, the sensing device registration method provided by the embodiment of this application may further include step 505 and step 506 as described below.

Step 505: The AMF receives the first sensing configuration information from the SF.

The first sensing configuration information may be sensing configuration information of the first sensing device.

Step 506: The AMF sends the first sensing configuration information to the sensing RAN.

It should be noted that: the relevant description of the sensing configuration information can specifically refer to the detailed description of the sensing configuration information in the above embodiment, and in order to avoid repetition, it will not be repeated herein.

Optionally, in the embodiment of this application, after the AMF sends the above first sensing configuration information to the sensing RAN, and the sensing measurement of the first sensing device is finished, the first sensing device may send a sensing measurement result (e.g., a fourth sensing measurement result) to the AMF via the sensing RAN, so that the AMF may report the sensing measurement result to the SF.

Based on this, the sensing device registration method provided by the embodiment of this application may further include step 507 and step 508 as described below.

Step 507: The AMF receives a fourth sensing measurement result from the sensing RAN.

Step 508: The AMF sends the fourth sensing measurement result to the SF.

The above fourth sensing measurement result may include at least one of the following:
the sensing measurement result of the sensing measurement performed, according to the sensing configuration information of the sensing RAN, by the sensing RAN; and
the sensing measurement result of the sensing measurement performed, according to the sensing configuration information of the sensing UE, by the sensing UE.

In the embodiment of this application, the RAN may carry the above fourth sensing measurement result in the N2 message and send same to the AMF.

In the embodiment of this application, since the first sensing device registration information can be used for performing sensing device registration on the first sensing device, after the AMF sends the first sensing device registration information to the SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

As shown in FIG. 6, an embodiment of this application provides a sensing device registration method, the method may be applied to the wireless communication system as shown in FIG. 1, and the method may include step 601 as described below.

Step 601: The sensing UE sends the sensing device registration information of the sensing UE to the sensing SF.

The above sensing device registration information of the sensing UE may be used for performing sensing device registration on the sensing UE

Optionally, in the embodiment of this application, the sensing device registration information of the sensing UE may include at least one of the following:
an ID of the sensing UE;
a sensing capability of the sensing UE;
location information of the sensing UE;
an ID of the sensing RAN;
a sensing capability of the sensing RAN; and
location information of the sensing RAN.

The sensing RAN may specifically be a RAN serving the sensing UE.

Optionally, in the embodiment of this application, before the above step 601, the sensing device registration method provided by the embodiment of this application may further include step 602 and step 603 as described below. The step 601 may be specifically realized by step 601a as described below.

Step 602: The sensing UE receives tunnel establishment parameters of the second sensing tunnel from the AMF.

Step 603: The sensing UE establishes, according to the tunnel establishment parameters of the second sensing tunnel, the second sensing tunnel.

Step 601a: The sensing UE sends the second sensing device registration information to the SF via the second sensing tunnel.

Optionally, in the embodiment of this application, the above second sensing tunnel may include any one of the following: a sensing bearer and a sensing PDU session.

It should be noted that: the relevant description about that the sensing UE establishes the second sensing tunnel can specifically refer to the detailed description of step 209 and step 210 in the above embodiment, and in order to avoid repetition, it will not be repeated herein.

Optionally, before the above step 601, the sensing device registration method provided by the embodiment of this application may further include step 604 and step 605 as described below.

Step 604: The sensing UE sends a registration request message to the sensing RAN.

Step 605: The sensing UE receives the registration acceptance message.

The above registration acceptance message may include information indicating that the sensing UE is permitted to perform a sensing service.

In the embodiment of this application, the method about how the sensing UE sends the registration request message to the sensing RAN, and how the sensing UE receives the registration acceptance message can specifically refer to the detailed description of step 201 and step 202 in the above embodiment, and in order to avoid repetition, it will not be repeated herein.

Optionally, before the above step 601, the sensing device registration method provided by the embodiment of this application may further include step 606 as described below.

Step 606: The sensing UE sends the sensing capability indication information of the sensing UE to the sensing RAN.

The sensing capability indication information of the sensing UE may be used for indicating that the sensing UE has a sensing capability.

In the embodiment of this application, the relevant description of step 606 can specifically refer to the detailed description of step 201 in the above embodiment, and in order to avoid repetition, it will not be repeated herein.

Optionally, before the above step 601, the sensing device registration method provided by the embodiment of this application may further include step 607 as described below.

Step 607: The sensing UE sends sensing request indication information to the sensing RAN.

The sensing request indication information may be used for indicating that the sensing UE requests to use the sensing capability which the sensing UE has.

It should be noted that: in the embodiment of this application, the relevant description of step 607 can specifically refer to the detailed description of step 203 in the above embodiment, and in order to avoid repetition, it will not be repeated herein.

Optionally, in the embodiment of this application, after the network side device performs sensing device registration on the sensing UE, if there is a demand of the sensing service, then the SF may send the sensing configuration information of the sensing UE to the sensing UE, so that the sensing UE performs sensing measurement in accordance with the sensing configuration information of the sensing UE, and reports the measurement result of the sensing measurement at the end of the sensing measurement.

Based on this, the sensing device registration method provided by the embodiment of this application may further include steps 608-610 as described below.

Step 608: The sensing UE receives sensing configuration information of the sensing UE from the SF.

In the embodiment of this application, the sensing UE may receive the sensing configuration information of the sensing UE from the SF via the second sensing tunnel.

Step 609: The sensing UE performs, according to the sensing configuration information of the sensing UE, first sensing measurement to obtain a first sensing measurement result.

Step 610: The sensing UE reports the first sensing measurement result.

It should be noted that: relevant description of the above step 609 and step 610 can specifically refer to the detailed description of step 205 and step 206 (which may specifically include step 206a, step 206b, and step 206c) in the above embodiment, and in order to avoid repetition, it will not be repeated here.

In the embodiment of this application, since the sensing UE can directly send the sensing device registration information of the sensing UE to the SF, so that the SF can perform sensing device registration on the sensing UE, after the sensing device is registered successfully, if it is required to perform a sensing service, the network side device may select a suitable sensing device from the registered sensing device to perform the sensing service.

The sensing device provided by the embodiment of this application is exemplarily explained below in a specific embodiment.

Example 1, the AMF registers the sensing device to the SF, as shown in FIG. 7:

Step 1a: The UE sends sensing capability indication information to the RAN. The sensing capability indication information is used to indicate that the UE is a UE having a sensing capacity.

Optionally, the sensing capability indication information is further used to indicate the sensing capability which the UE has, and for example, may include at least one of the following: a sensing measurement method, a type of a sensing service, a sensing purpose, a sensing measurement signal, and sensing measurement accuracy.

The sensing measurement method may include at least one of the following: the UE sends a measurement signal and also receives the measurement signal to perform measurement, another UE sends a measurement signal and the UE receives the measurement signal to perform measurement, the RAN (such as a base station) sends a measurement signal and the UE receives the measurement signal to perform measurement, and the UE sends a measurement signal and the RAN receives the measurement signal to perform measurement. "Send" refers to sending a measurement signal and "receive" refers to receiving the measurement signal to perform measurement.

The type of the sensing service may include at least one of the following: a wide sensing range and a high real-time requirement; a wide sensing range and a low real-time requirement; a narrow sensing range and a high real-time requirement; and a narrow sensing range and a low real-time requirement; The type of the sensing service may be indicated by numbers, letters or other character strings indicating the service types.

The sensing purpose may include one or more application scenarios supported by the sensing device that require the sensing service, such as respiration monitoring, monitoring of the surrounding traffic environment, and the like.

A sensing measurement signal indicates a signal supported by the sensing device (that can be sent or can be received, or can be both sent and received) for sensing measurement. For example, the signal may include at least one of the following: RSRP, RSRQ, a multipath angle of arrival, a multipath angle of departure, a multipath time delay, and a Doppler frequency.

The sensing measurement accuracy may include at least one of the following: a sensing resolution and a sensing error.

Exemplarily, the UE sends a registration request message to the RAN, and the registration request message includes sensing capability indication information of the UE. Alternatively, the UE sends an RRC message to the RAN, and the RRC message includes the registration request message and the sensing capability indication information of the UE. In the second case, optionally, the registration request message may further include the sensing capability indication information of the UE. Optionally, when sending the sensing capability indication information of the UE, the UE may also send indication information indicating that the UE requests to use the sensing capability at the same time.

Step 1b: The RAN sends the sensing capability indication information of the UE to the AMF.

For example, the RAN sends an N2 message to the AMF, where the N2 message includes the sensing capability indication information of the UE. The sensing capability indication information of the UE may be included in the registration request message or may be transmitted in the N2 message together with the registration request message. Optionally, the RAN also includes the sensing capability indication information of the RAN in the N2 message. The sensing capability indication information of the RAN is used to indicate that the RAN is a RAN having a sensing capacity. Optionally, the sensing capability indication information of the RAN is further used to indicate the sensing capability which the RAN has, and for example, may include at least one of the following: a sensing measurement method, a type of a sensing service, a sensing purpose, a sensing measurement signal, and sensing measurement accuracy. The description of each of these items may refer to the description in 1a.

Optionally, step 1c, the AMF obtains subscription data of the UE from the UDM. The subscription data of the UE indicates whether the UE is capable of performing a sensing service. For example, the subscription data of the UE contains a sensing permission indication. The sensing permission indication indicates whether the UE can perform the sensing service. In this embodiment, example of permission is illustrated.

The AMF may determine, according to the subscription data of the UE and the local configuration, whether the UE is permitted to perform the sensing service.

Step 2: The UE receives a registration acceptance message from the AMF, where the registration acceptance message includes an indication about whether the UE is permitted to perform the sensing service. This embodiment is illustrated as an example of permission.

Optionally, the registration acceptance message may also include parameters for establishing a sensing PDU session or a sensing bearer, for example, at least one of a DNN, an S-NSSAI, a QoS parameter, and an address of the SF. It is to be noted that the AMF may send the PDU session parameters used by the sensing service to the UE during the UE registration process, or may send the sensing PDU session parameters or the sensing bearer parameters used by the sensing service to the UE after registration of the sensing UE. For example, by sending a UE configuration update message or a UE parameter update message, the PDU session parameters or the sensing bearer parameters used by the sensing service may be included in the UE policy (e.g., in the UE routing selecting policy URSP) in the UE configuration update message or the UE parameter update message.

Step 3: The AMF sends the sensing device registration information to the SF.

The sensing device registration information may include an ID of the sensing UE, and a sensing capability of the sensing UE. Optionally, location information of the sensing UE may also be included. The location information may be represented by at least one of the following: a TAI, a Cell ID, and a geographic location.

Optionally, the sensing device registration information may further include an ID of a RAN serving the sensing UE. Optionally, at least one of a sensing capability of the RAN serving the sensing UE and location information of the RAN serving the sensing UE may also be included.

Step 4: The SF acquires a sensing service request (i.e., the sensing service information).

Method I: the AF sends a sensing service request message to the SF, where the sensing service request message carries the description information of the sensing service. Optionally, the AF may send the sensing service request message to the SF via the NEF.

Method II: A consumer (consumer) UE may also directly send the sensing service request message to the SF. The consumer UE points to the UE where the network requests the sensing service, and may also be a sensing UE or another UE.

Step 5: The SF determines, according to the received sensing service information, a sensing device participating in sensing signal measurement. The sensing device may include at least one of a sensing UE, a sensing UE and a RAN serving the sensing UE, and a sensing RAN.

Optionally, the SF may acquire the sensing device in a sensing service region from the AMF.

(I), The SF determines the sensing region according to the received sensing service information.

(II), The SF sends an event exposure service request message to the AMF, where the event exposure service request message includes the indication information of the sensing region.

(III)a, the SF receives an event exposure response message from the AMF, where the event exposure response message includes identification information of a sensing device located in the sensing region.

Or, (III)b, the SF receives an event exposure response message from the AMF, where the event exposure response message includes identification information of a sensing device that can provide sensing signal measurement of the sensing region.

Or, (III)c, the SF receives an event exposure response message from the AMF, where the event exposure response message includes identification information of a UE and/or a RAN located in the sensing region, and the SF determines, according to the sensing capability information of the UE and/or the RAN stored in the SF, a sensing device participating in sensing signal measurement.

The ID of the sensing device in the event exposure response message may be at least one of a sensing UE ID and a sensing RAN ID. The sensing UE ID includes identification information on the N2 interface for identifying the UE, such as at least one of a gNB NGAP ID and an AMF NGAP ID.

It should be noted that: step 5 may not have to be executed if the information required for the SF is included in step 3. For example, the ID of the sensing UE, the sensing capability of the sensing UE, the RAN to which the sensing UE is connected, and the location information of the sensing UE are included in step 3. Then step 5 may not need to be executed. If the SF considers that it is necessary to confirm or acquire some or all of the required information from the AMF, the SF executes step 5.

It should be noted that: the SF may obtain a plurality of sensing UE IDs and/or a plurality of sensing RAN IDs from the AMF. The SF may also determine, according to response of the AMF, a plurality of sensing UEs and/or sensing RANs to execute the sensing service. At this point, the later steps are executed for each sensing UE or each sensing RAN.

Step 6: The SF sends sensing configuration information to the AMF. The sensing configuration information is sensing configuration information that needs to be sent to the sensing UE via the AMF.

The sensing configuration information may include at least one of a Sensing service correlation ID, sensing service description information, and a sensing device ID.

The Sensing service correlation ID is used to identify a sensing service session, and the Sensing service correlation ID may be assigned by the SF.

The sensing device ID is used to indicate a sensing device participating in sensing signal measurement, and the sensing device may include a sensing UE and/or a sensing RAN. The sensing device ID may include at least one of a sensing RAN ID and a sensing UE ID.

The sensing service description information may include a strategy which the SF formulates for the sensing service description information and control information, and may for example include at least one of the following: a sensing measurement method, a sensing service, a sensing purpose, a sensing measurement signal, and sensing measurement accuracy.

The sensing configuration information may include at least one of sensing configuration information of the sensing UE and sensing configuration information of the sensing RAN.

Exemplarily, the SF may invoke a sensing configuration transfer service of the AMF, and the sensing configuration information is included in the sensing configuration transfer service to be sent to the AMF.

Step 7: The AMF sends an N2 message to the RAN, where the N2 message includes a NAS message of the sensing configuration information.

Step 8: The RAN forwards the above NAS message to the UE.

Step 9: The UE and/or the RAN executes sensing measurement. The UE and the RAN may perform the sensing measurement according to the received sensing configuration information.

Step 10: The UE sends a sensing measurement result to the SF.

Method I: The UE sends the NAS message to the AMF, where the NAS message includes the sensing measurement result of the UE. The RAN receives the NAS message and sends the N2 message to the AMF, where the N2 message includes the NAS message. Optionally, the sensing measurement result of the RAN may also be included. The AMF forwards the received sensing measurement result of the UE and/or the RAN to the SF.

Method II: The UE sends the RRC message to the RAN, where the NAS message includes the sensing measurement result of the UE. The RAN sends an N2 message to the AMF, where the N2 message includes the sensing measurement result of the UE. Optionally, the sensing measurement result of the RAN may also be included. The AMF forwards the received sensing measurement result of the UE and/or the RAN to the SF.

Method III: The UE sends the sensing measurement result of the UE to the SF via the sensing session or the sensing bearer. For example, as in step 2, if the UE obtains the sensing PDU session parameter or the sensing bearer parameter used by the sensing service, the UE may establish a sensing PDU session or a sensing bearer. The UE may use the sensing PDU session or the sensing bearer to send the sensing measurement result to the SF.

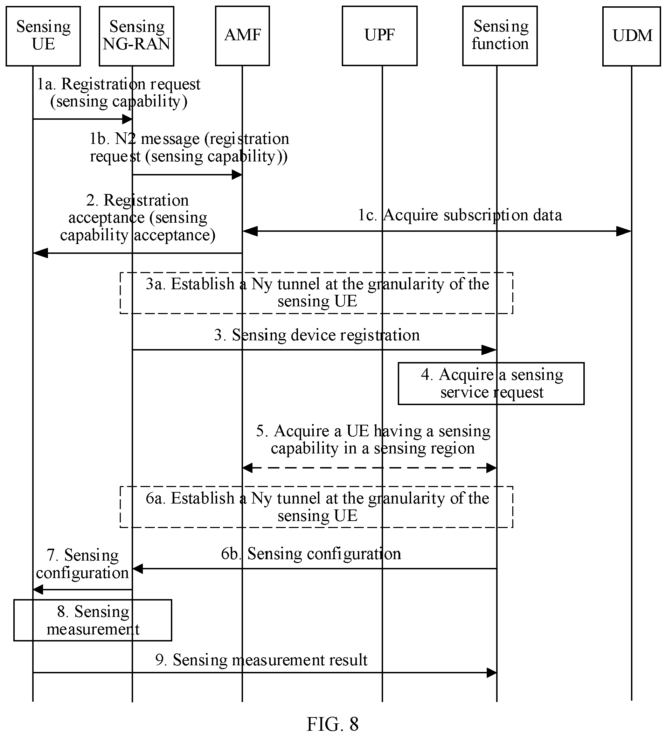

Example 2, the RAN registers the sensing device to the SF, as shown in FIG. 8:

Step 1: The UE sends a registration request message to the AMF, optionally where the registration request message may include sensing capability indication information of the UE. Specific reference may be made to the description of step 1a, step 1b, and step 1c in Example 1.

In addition, it should be noted that, optionally, the AMF may send an indication about whether the UE is permitted to perform the sensing service to the RAN at the same time as it sends a registration acceptance message to the RAN. Optionally, the AMF also sends the sensing capability of the UE to the RAN.

Step 2: The UE receives the registration acceptance message from the AMF, where the registration acceptance message includes an indication about whether the UE is permitted to perform the sensing service, and specific reference may be made to the description in Example 1.

Step 3: the RAN sends the sensing device registration information to the SF.

The sensing device registration information may include at least one of the following: identification information of the sensing device (e.g., when the sensing device is a UE, the identification information may be one of an IMSI, an IMEI, a MAC address, a cell phone number, a SUCI, a UE temporary ID, and an ID on the N2 interface for identifying the UE, and when the sensing device is a RAN, the identification information may be one of an FQDN, an ID and a MAC address), and a sensing capability of the sensing device. Optionally, location information of the sensing device may also be included. The sensing device may include at least one of a sensing UE and a sensing RAN.

The RAN may send the sensing device registration information via a protocol (e.g., the Next Generation Radio Sensing Protocol NRSPa protocol) between the RAN and the SF.

The registration information of the sensing UE and the registration information of the sensing RAN may be combined in a single message to be sent, or may be sent separately in different messages.

Optionally, in step 3a, the RAN may establish a Ny tunnel at the granularity of the UE with the SF. For example, when the RAN acquires the sensing capability of the sensing UE, it may send a NyAP establishment request to the SF, where the NyAP establishment request includes the registration information of the sensing UE. Optionally, the registration information of the sensing RAN may also be included.

The ID of the UE may include an ID assigned by the RAN for the UE on the Ny interface in addition to the above ID, and may be, for example, a RAN NyAP ID. Optionally, tunnel info on the RAN side, namely, the RAN Ny tunnel info, may also be included.

The SF receives a NyAP establishment request and sends a NyAP establishment response message to the RAN. The NyAP establishment response message includes the RAN NyAP ID, and optionally may also include an ID assigned by the SF for the UE, such as an SF NyAP ID. The SF NyAy ID may be the same as or different from the RAN NyAP ID. In the case that the SF NyAP ID may be the same as the RAN NyAP ID, it may appear only once in the NyAP establishment response message. Optionally, tunnel info on the SF side, namely, the SF Ny tunnel info, may also be included.

Optionally, the RAN may establish a Ny tunnel at the granularity of the UE with the SF via the AMF. That is, all messages in the above methods are transferred via the AMF.

When the Ny tunnel at the granularity of the UE between the RAN and the SF is established, it is required to carry the identification information of the UE on Ny for message interaction or data interaction between the RAN and the SF for the UE, such as at least one of the SF NyAP ID, the RAN NyAP ID, the RAN Ny tunnel info, and the SF Ny tunnel info.

Step 4: The SF acquires a sensing service request, which can specifically refer to the description in Example 1.

Step 5: optionally, the SF acquires the sensing devices (e.g., UE and/or RAN) in the sensing service region from the AMF, which can specifically refer to the description in Example 1.

Step 6: the SF sends sensing configuration information to the RAN. The sensing configuration information may include sensing configuration information that needs to be sent to the sensing UE, optionally, the sensing configuration information of the RAN may also be included. The sensing configuration information may refer to the description in step 6 of Example 1.

Optionally, the SF may first perform an establishment process of the Ny tunnel at the granularity of the UE (6a). Exemplarily, after the SF determines the sensing device participating in the sensing signal measurement, the SF may trigger an establishment process of the Ny tunnel at the granularity of the UE if the sensing device includes a UE.

For example, a: The SF sends a NyAP establishment request message to the RAN, where the NyAP establishment request message includes an ID for the RAN to identify the UE on the N2 interface. Optionally, the SF NyAP ID may also be included. Optionally, tunnel info on the SF side, namely, the SF Ny tunnel info, may also be included.

b: The RAN determines, according to the ID for the RAN to identify the UE on the N2 interface, the UE. Optionally, the RAN assigns the RAN NyAP ID to the UE. The RAN NyAP ID uniquely identifies a UE in the RAN and used for identifying the UE on a Ny interface.

c: The RAN sends a NyAP establishment response message to the SF. The SF receives the NyAP establishment response message from the RAN, where the NyAP establishment response message includes at least one of the ID for the RAN to identify a UE on the N2 interface and the SF NyAP ID. Optionally, tunnel info on the RAN side, namely, the RAN Ny tunnel info, may also be included.

The SF NyAP ID may be the same as or different from the RAN NyAP ID. In the case that the SF NyAP ID may be the same as the RAN NyAP ID, it may appear only once in the NyAP establishment response message. The ID for the RAN to identify a UE on the N2 interface may be the same as or different from the SF NyAP ID.

As another possible way, the SF can establish a Ny tunnel at the granularity of the UE with the RAN via the AMF, i.e., all the messages in the above process are transferred via the AMF.

When the Ny tunnel at the granularity of the UE between the RAN and the SF is established, it is required to carry the identification information of the UE on Ny for message interaction or data interaction between the RAN and the SF for the UE, such as at least one of the SF NyAP ID, the RAN NyAP ID, the RAN Ny tunnel info, and the SF Ny tunnel info.

Step 7: The RAN sends sensing configuration information to the UE.

Step 8: The UE and/or the RAN executes sensing measurement, which may specifically refer to the description in Example 1.

Step 9: The UE sends a sensing measurement results to the SF, which may specifically refer to the description in Example 1.

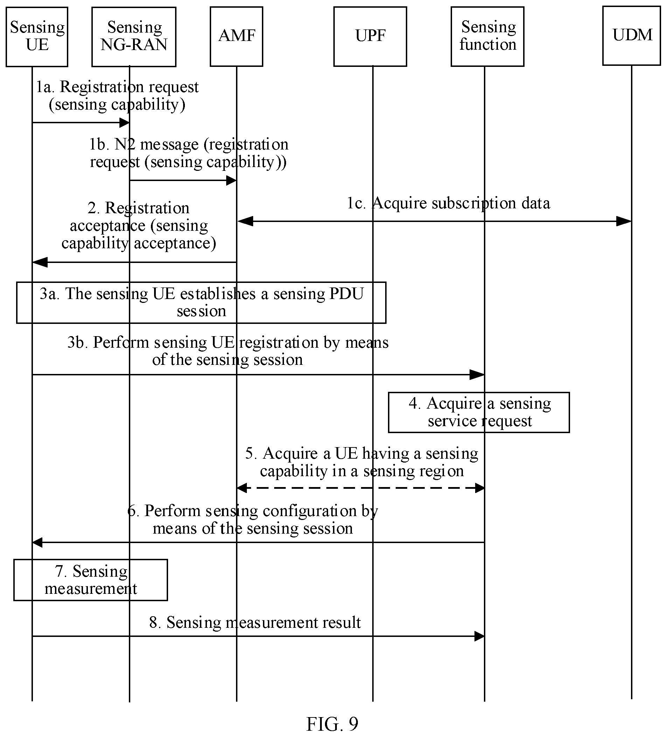

In Example 3, the UE registers the sensing UE to the SF via a PDU session, as shown in FIG. 9.

Step 1: The UE sends a registration request message to the AMF, where the registration request message includes the sensing capability indication information of the UE, which may specifically refer to the description of step 1a, step 1b, and step 1c in Example 1.

Step 2: The UE receives the registration acceptance message from the AMF, where the registration acceptance message includes an indication about whether the UE is permitted to perform the sensing service, and specific reference may be made to the description in Example 1.

Step 3: The UE sends sensing device registration information to the SF via a sensing PDU session or a sensing bearer.

Optionally, 3a: The UE establishes the sensing PDU session or the sensing bearer. For example, if in step 2, the UE obtains the sensing PDU session parameters or the sensing bearer parameters used by the sensing service, the UE may establish the sensing PDU session or the sensing bearer. Exemplarily, the UE may send the sensing device registration information to the SF by means of the NRSP message.

Step 4: The SF acquires a sensing service request, which can specifically refer to the description in Example 1.

Step 5: Optionally, the SF acquires the UE in the sensing service region from the AMF, which may specifically refer to the description in Example 1.

Step 6: The SF sends sensing configuration information to the UE via the sensing PDU session or the sensing bearer of the UE.

Step 7: The UE performs sensing measurement, which may specifically refer to the description in Example 1.

Step 8: The UE sends a sensing measurement result to the SF via the sensing PDU session or the sensing bearer. Exemplarily, the UE may send the sensing measurement result to the SF using an NRSP message.

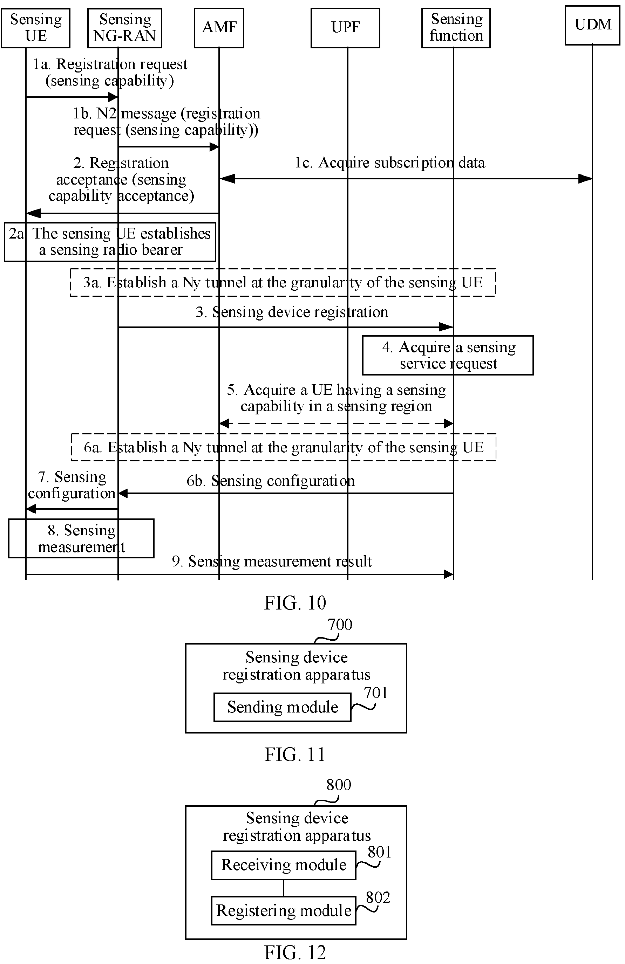

In Example 4, the UE establishes a sensing radio bearer and the RAN registers the sensing device to the SF, as shown in FIG. 10.

Step 1: The UE sends a registration request message to the AMF, where the registration request message includes the sensing capability indication information of the UE, which may specifically refer to the description of step 1a, step 1b, and step 1c in Example 1. In particular, the UE may carry the sensing capability indication information of the UE in the RRC message.

Step 2: The UE receives the registration acceptance message from the AMF, where the registration acceptance message includes an indication about whether the UE is permitted to perform the sensing service, and specific reference may be made to the description in Example 1.

Step 2a: The UE establishes a new radio sensing bearer. The UE may establish the sensing radio bearer according to the received sensing bearer parameters.

Step 3: The RAN sends sensing device registration information to the SF, which may specifically refer to the description in Example 2.

Step 4: The SF acquires a sensing service request, which can specifically refer to the description in Example 1.

Step 5: Optionally, the SF acquires the UE in the sensing service region from the AMF, which may specifically refer to the description in Example 1.

Step 6: The SF sends sensing configuration information to the RAN, which may specifically refer to the description in Example 2.

Step 7: The RAN sends sensing configuration information to the UE. The RAN may send the sensing configuration information to the UE by means of the RRC message. Or, the RAN may send the sensing configuration information to the UE by means of the sensing radio bearer of the RAN.

Step 8: The UE and/or the RAN executes sensing measurement, which may specifically refer to the description in Example 1.

Step 9: The UE sends a sensing measurement results to the SF, which may specifically refer to the description in Example 1.

In addition, the UE may also send the sensing measurement result to the SF in a possible method IV The UE establishes a sensing radio bearer to send the sensing measurement result of the UE to the SF. For example, in step 2, if the UE obtains a sensing bearer parameter used by the sensing service, the UE may establish a sensing radio bearer. The UE may use the sensing radio bearer to send the sensing measurement result to the RAN. The RAN sends the sensing measurement result of the UE to the SF, and optionally the sensing measurement result of the RAN is further included. For example, the RAN may send the sensing measurement result to the SF via the NRSPa protocol, or via a Ny tunnel at the granularity of the UE.

It should be noted that: in the sensing device registration method provided by the embodiment of this application, the executing body may be a sensing device registration apparatus, or, a control module for executing the sensing device registration method in the sensing device registration apparatus. In the embodiment of this application, a sensing device registration apparatus provided by the embodiment of this application is illustrated by taking that the sensing device registration apparatus executes the sensing device registration method as an example.

As shown in FIG. 11, a sensing device registration apparatus 700 is provided by an embodiment of this application, the sensing device registration apparatus 700 including a sending module 701. The sending module 701 is configured to send sensing capability indication information of a sensing UE to a sensing RAN to make a network side device perform sensing device registration on the sensing UE, the sensing capability indication information of the sensing UE being used for indicating that the sensing UE has a sensing capability.

Optionally, the sending module is specifically configured to send a registration request message to the sensing RAN, where the registration request message includes sensing capability indication information of the sensing UE.

Optionally, the sensing device registration apparatus further includes a receiving module. The receiving module is configured to receive a registration acceptance message, where the registration acceptance message includes information indicating that the sensing UE is permitted to perform a sensing service.

Optionally, the sending module is further configured to send sensing request indication information to the sensing RAN, where the sensing request indication information is used for requesting to use the sensing capability which the sensing UE has.

Optionally, the sensing device registration apparatus further includes a receiving module and an executing module. The receiving module is configured to receive sensing configuration information of the sensing UE from the sensing RAN. The executing module is configured to execute, according to the sensing configuration information of the sensing UE, first sensing measurement to obtain a first sensing measurement result. The sending module is further configured to report the first sensing measurement result.

Optionally, the sending module is specifically configured to send a first message to the sensing RAN, the first message carrying the first sensing measurement result, the first message being a NAS message or an RRC message; or, the sending module is specifically configured to send, the first sensing measurement result to the sensing RAN by means of a first sensing tunnel, the first sensing tunnel being a sensing tunnel between the sensing UE and the sensing RAN; or, the sending module is specifically configured to send, the first sensing measurement result to an SF by means of a second sensing tunnel, the second sensing tunnel being a sensing tunnel between the sensing UE and the SF.

Optionally, the receiving module is further configured to receive tunnel establishment parameters of the first sensing tunnel from an AMF. The executing module is further configured to establish, according to the tunnel establishment parameters of the first sensing tunnel, the first sensing tunnel, the first sensing tunnel being a sensing radio bearer.

Optionally, the receiving module is further configured to receive tunnel establishment parameters of a second sensing tunnel from an AMF. The executing module is further configured to establish, according to the tunnel establishment parameters of the second sensing tunnel, the second sensing tunnel. The second sensing tunnel includes any one of the following: a sensing bearer and a sensing PDU session.

According to the sensing device registration apparatus provided by the embodiment of this application, since the sensing capability indication information is used for indicating that the sensing UE has a sensing capability, i.e., indicating that the sensing UE is a sensing device, after the sensing UE sends the sensing capability information to the sensing RAN, if it is required to perform a sensing service, the network side device may select, according to the sensing capability indication information, a suitable sensing device to perform the sensing service.

As shown in FIG. 12, a sensing device registration apparatus 800 is provided by an embodiment of this application, the sensing device registration apparatus 800 including a receiving module 801 and a registering module 802. The receiving module 801 is configured to receive first sensing device registration information sent by a first device, the first sensing device registration information being used for performing sensing device registration on a first sensing device, and the first sensing device including at least one of a sensing UE and a sensing RAN. The registering module 802 is configured to perform, according to the first sensing device registration information, sensing device registration on the first sensing device.

Optionally, the sensing device registration apparatus further includes a determining module and a sending module. The receiving module is further configured to receive sensing service information. The determining module is configured to determine, according to the sensing service information, that the first sensing device is a sensing device participating in a sensing service indicated by the sensing service information. The sending module is configured to send first sensing configuration information to the first device, the first sensing configuration information being sensing configuration information of the first sensing device.

Optionally, the first device is any one of the following: the sensing UE, the sensing RAN and the AMF.

Optionally, the determining module includes a determining sub-module, a sending sub-module and a receiving sub-module. The determining sub-module is configured to determine, according to the sensing service information, a sensing region for performing the sensing service. The sending sub-module is configured to send an event exposure service request message to the AMF, the event exposure service request message including indication information of the sensing region. The receiving sub-module is configured to receive an event exposure response message from the AMF. The determining sub-module is configured to determine, according to the event exposure response message, that the first sensing device among devices indicated by the event exposure response message is a sensing device participating in the sensing service indicated by the sensing service information.

Optionally, the device indicated by the event exposure response message includes at least one of the following:
a sensing device located in the sensing region;
a sensing device having a capability to provide a sensing service for the sensing region; and
a device located in the sensing region.

Optionally, the receiving module is further configured to receive a second sensing measurement result from a second device, the second sensing measurement result being a measurement result corresponding to a sensing service indicated by the sensing service information. The second device includes at least one of the following: the sensing UE, the sensing RAN and the AMF.

Optionally, the second device includes a sensing UE, and the first sensing device includes a sensing UE. The receiving module is specifically configured to receive the second sensing measurement result from the sensing UE via the second sensing tunnel. The second sensing tunnel is a sensing bearer or a sensing PDU session of the sensing UE.

Optionally, the sensing device registration apparatus further includes an establishing module. The second device includes a sensing RAN, and the first sensing device includes a sensing UE. The establishing module is configured to establish a third sensing tunnel between the SF and the sensing RAN. The receiving module is specifically configured to receive the second sensing measurement result from the sensing RAN by means of the third sensing tunnel.

Optionally, the first sensing device registration information includes at least one of the following:
an ID of the sensing UE;
a sensing capability of the sensing UE;
location information of the sensing UE;
an ID of the sensing RAN;
a sensing capability of the sensing RAN; and
location information of the sensing RAN.

According to the sensing device registration apparatus provided by the embodiment of this application, since the SF, after receiving the first sensing device registration information, can perform sensing device registration on the first sensing device, i.e., the sensing capability of the first sensing device can be registered to a network side device, so that if it is required to perform a sensing service, the network side device may select a suitable sensing device from the registered sensing device to perform the sensing service.

As shown in FIG. 11, a sensing device registration apparatus 700 is provided by an embodiment of this application, the sensing device registration apparatus 700 including a sending module 701. The sending module 701 is configured to send first sensing device registration information to an SF, the first sensing device registration information being used for performing sensing device registration on a first sensing device, and the first sensing device including at least one of a sensing UE and a sensing RAN.

Optionally, the sensing device registration apparatus further includes a receiving module. In the case where the first sensing device includes a sensing UE, the receiving module is configured to receive a first message from an AMF, the first message including information indicating that the sensing UE is permitted to perform a sensing service.

Optionally, the sensing device registration apparatus further includes a receiving module. In the case where the first sensing device includes a sensing UE, the receiving module is configured to receive sensing capability indication information of the sensing UE from a third device, the sensing capability indication information of the sensing UE being used for indicating that the sensing UE has a sensing capability. The third device includes at least one of the AMF and the sensing UE.

Optionally, the sensing device registration apparatus further includes a receiving module. The receiving module is configured to receive first sensing configuration information from the SF, the first sensing configuration information being sensing configuration information of the first sensing device.

Optionally, the first sensing device includes a sensing UE, and the sending module is further configured to send sensing configuration information of the sensing UE to the sensing UE; the receiving module is further configured to receive a first sensing measurement result from the sensing UE; the sending module is further configured to send the first sensing measurement result to the SF.

Optionally, the sensing device registration apparatus further includes an establishing module. The establishing module is configured to establish a third sensing tunnel between the sensing RAN and the SF. The sending module is specifically configured to send the first sensing measurement result to the SF via the third sensing tunnel.

Optionally, the sensing device registration apparatus further includes an executing module. In the case where the first sensing device includes a sensing RAN, the executing module is configured to execute, by the sensing RAN, according to the sensing configuration information of the sensing RAN, second sensing measurement to obtain a third sensing measurement result. The sending module is further configured to send the third sensing measurement result to the SF.

Optionally, the first sensing device registration information includes at least one of the following:
an ID of the sensing UE;
a sensing capability of the sensing UE;
location information of the sensing UE;
an ID of the sensing RAN;
a sensing capability of the sensing RAN; and
location information of the sensing RAN.

According to the sensing device registration apparatus provided by the embodiment of this application, since the first sensing device registration information can be used for performing sensing device registration on the first sensing device, after the first sensing device registration information is sent to the SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

As shown in FIG. 11, a sensing device registration apparatus 700 is provided by an embodiment of this application, the sensing device registration apparatus 700 including a sending module 701. The sending module 701 is configured to send first sensing device registration information to an SF, the first sensing device registration information being used for performing sensing device registration on a first sensing device, and the first sensing device including at least one of a sensing UE and a sensing RAN.

Optionally, the sensing device registration apparatus further includes a determining module. In the case where the first sensing device includes a sensing UE, the determining module is configured to determine, according to first information, that the sensing UE is permitted to perform a sensing service, the first information including at least one of a local configuration and subscription data of the sensing UE.

Optionally, the sensing device registration apparatus further includes a receiving module. The receiving module is configured to receive, from a sensing RAN, first sensing capability indication information, the first sensing capability indication information being used for indicating that the first sensing device has a sensing capability.

Optionally, the sensing device registration apparatus further includes a receiving module. The receiving module is configured to receive sensing request indication information from the sensing RAN, the sensing request indication information being used for requesting to use the sensing capability which the sensing UE has.

Optionally, the sensing device registration apparatus further includes a receiving module. The receiving module is configured to receive first sensing configuration information from the SF, the first sensing configuration information being sensing configuration information of the first sensing device. The sending module is further configured to send the first sensing configuration information to the sensing RAN.

Optionally, the receiving module is further configured to receive a fourth sensing measurement result from the sensing RAN. The sending module is further configured to send the fourth sensing measurement result to the SF. The fourth sensing measurement result includes at least one of the following: the sensing measurement result of the sensing measurement performed, according to the sensing configuration information of the sensing RAN, by the sensing RAN; and the sensing measurement result of the sensing measurement performed, according to the sensing configuration information of the sensing UE, by the sensing UE.

Optionally, the first sensing device registration information includes at least one of the following:
an ID of the sensing UE;
a sensing capability of the sensing UE;
location information of the sensing UE;
an ID of the sensing RAN;
a sensing capability of the sensing RAN; and
location information of the sensing RAN.

According to the sensing device registration apparatus provided by the embodiment of this application, since the first sensing device registration information can be used for performing sensing device registration on the first sensing device, after the first sensing device registration information is sent to the SF, the SF can perform, according to the first sensing device registration information, sensing device registration on the first sensing device. In this way, after the sensing device is successfully registered, if it is required to perform a sensing service, a network side device may select a suitable sensing device from the registered sensing device to perform the sensing service.

The sensing device registration apparatus in the embodiment of this application may be an apparatus, an apparatus or electronic device with an operating system, or a component in a UE, an integrated circuit or a chip. The apparatus or electronic device may be a mobile UE or may be a non-mobile UE, and may also be a network side device (e.g., an access network device and a core network device, etc.). Exemplarily, the mobile UE may include, but not limited to the type of the UE 11 illustrated above; the non-mobile UE can be a server, a network attached storage (Network Attached Storage, NAS), a personal computer (personal computer, PC), a television (television, TV), a teller machine, or a self-service machine, which is not specifically limited in the embodiment of this application.

The sensing device registration apparatus provided by the embodiment of this application can implement various processes implemented by the foregoing method embodiments and achieve the same technical effect. To avoid repetition, details are not described herein again.

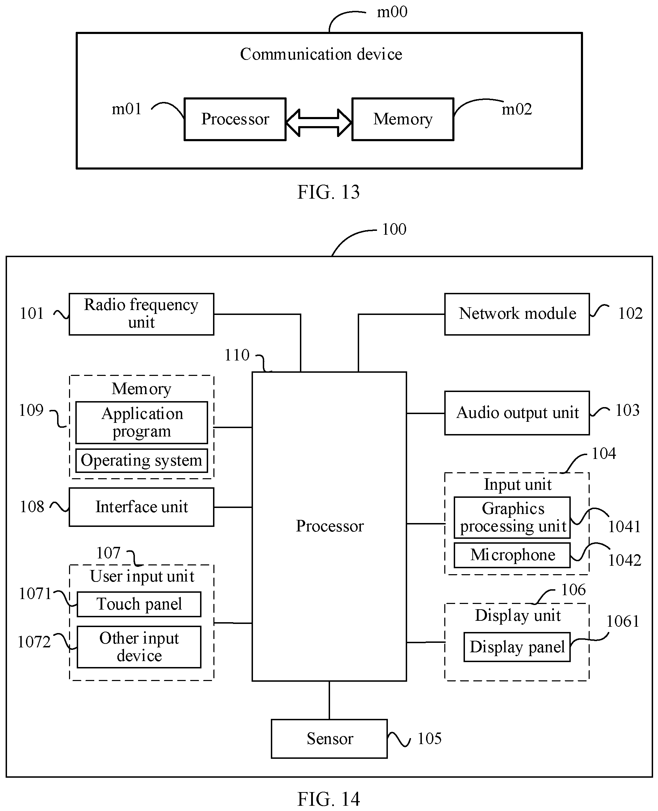

Optionally, as shown in FIG. 13, an embodiment of this application further provides a communication device m00, including a processor m01, a memory m02, and a program or instructions stored in the memory m02 and executable on the processor m01. For example, when the communication device m00 is a UE, and when the program or instructions are executed by the processor m01, the various processes of the embodiment of the sensing device registration method described above are implemented, and the same technical effect can be achieved. When the communication device m00 is a network side device, and when the program or instructions are executed by the processor m01, the various processes of the embodiment of the sensing device registration method described above are implemented, and the same technical effect can be achieved, details of which are omitted here for brevity.

An embodiment of this application further provides a U, including a processor and a communication interface, where the communication interface is configured to send sensing capability indication information of a sensing UE to a sensing RAN to make a network side device perform sensing device registration on the sensing UE; or the communication interface is configured to send sensing device registration information of the sensing UE to an SF. The UE embodiment corresponds to the above UE side method embodiment, each implementation process and implementation method of the above method embodiment can be applied in the UE embodiment, and the same technical effect can be achieved. Specifically, FIG. 14 is a schematic structural diagram of hardware of a UE implementing the embodiments of this application.

The UE 100 (which may be a sensing UE in the embodiments of this application) includes, but is not limited to: at least part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the UE 100 may further include a power supply (such as a battery) for supplying power to the various components, and the power supply may be logically connected to the processor 110 by a power management system, thereby implementing functions such as charging, discharging, and power consumption management by means of the power management system. The UE structure shown in FIG. 14 does not constitute a limitation on the UE, and the UE may include components more or fewer than components shown in the figure, or combine some components, or have different component arrangements, which will not be described in detail here.

It is to be understood that, in the embodiment of this application, the input unit 104 may include a graphics processing unit (Graphics Processing Unit, GPU) 1041 and a microphone 1042. The graphics processing unit 1041 performs processing on image data of a static picture or a video that is obtained by an image acquisition device (for example, a camera) in a video acquisition mode or an image acquisition mode. The display unit 106 may include a display panel 1061. The display panel 1061 may be configured in the form of a liquid crystal display (LCD), an organic light-emitting diode (OLED), or the like. The user input unit 107 includes a touch panel 1071 and another input device 1072. The touch panel 1071 is also called a touchscreen. The touch panel 1071 may include two parts: a touch detection apparatus and a touch controller. The another input device 1072 may include, but not limited to, a physical keyboard, a functional key (such as a volume control key or a switch key), a track ball, a mouse, and a joystick, which will not be described in detail here.

In the embodiment of this application, after downlink data from the network side device is received by the radio frequency unit 101, the downlink data is processed by the processor 110. In addition, uplink data is transmitted to the network side device. Generally, the radio frequency unit 101 includes, but is not limited to, an antenna, at least one amplifier, a transceiver, a coupler, a low noise amplifier, a duplexer, and the like.

The memory 109 may be configured to store a software program or instruction and various data. The memory 109 may mainly include a program and instruction storage area and a data storage area, where the program or instruction storage area may store an operating system, an application program or instruction required by at least one function (for example, a sound playback function and an image display function), and the like. In addition, the memory 109 may include a high-speed random access memory, and may also include a non-transient memory, where the non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory, For example, at least one magnetic disk storage device, a flash memory or another non-transient solid-state storage device is included.

The processor 110 may include one or more processing units. Optionally, the processor 110 may integrate an application processor and a modem processor, where the application processor mainly processes an operating system, a user interface, an application program or instruction, and the like, and the modem processor mainly processes wireless communication, such as a baseband processor. It can be understood that, the modem processor described above may not be integrated into the processor 110.

The radio frequency unit 101 is configured to send sensing capability indication information of a sensing UE to a sensing RAN to make a network side device perform sensing device registration on the sensing UE, the sensing capability indication information of the sensing UE being used for indicating that the sensing UE has a sensing capability.

In the embodiment of this application, since the sensing capability indication information is used for indicating that the sensing UE has a sensing capability, i.e., indicating that the sensing UE is a sensing device, after the sensing UE sends the sensing capability information to the sensing RAN, if it is required to perform a sensing service, the network side device may select, according to the sensing capability indication information, a suitable sensing device to perform the sensing service.

The radio frequency unit 101 may be further configured to send sensing device registration information of a sensing UE to an SF, the sensing device registration information of the sensing UE being used for performing sensing device registration on the sensing UE.

In the embodiment of this application, since the sensing UE can directly send the sensing device registration information of the sensing UE to the SF, so that the SF can perform sensing device registration on the sensing UE, after the sensing device is registered successfully, if it is required to perform a sensing service, the network side device may select a suitable sensing device from the registered sensing device to perform the sensing service.

An embodiment of this application further provides a network side device, including a processor and a communication interface. The network side device embodiment corresponds to the above network side device (including a RAN, an AMF and an SF) method embodiment, each implementation process and implementation method of the above method embodiment can be applied in the network side device embodiment, and the same technical effect can be achieved.

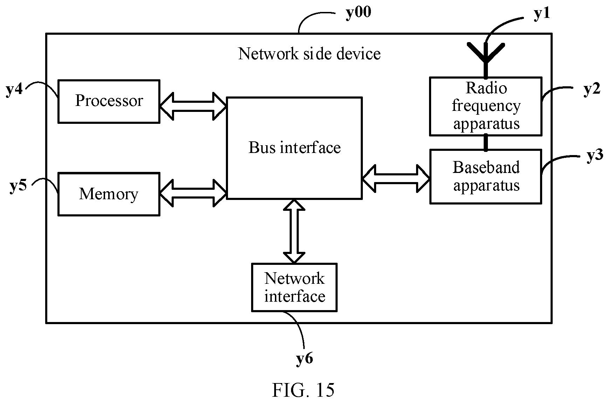

An embodiment of this application further provides a network side device. As shown in FIG. 15, the network side device y00 includes a processor y4 and a memory y5. The processor y4 can be configured to invoke programs in the memory y5 to execute a method executed by the sensing RAN, AMF, or SF in the embodiment of this application.

Optionally, in the embodiment of this application, when the network side device is a sensing RAN, the network side device y00 provided by the embodiment of this application may further include: an antenna y1, an RF apparatus y2, and a baseband apparatus y3. The antenna y1 is connected to the RF apparatus y2. In the uplink direction, the radio frequency apparatus y2 receives information via the antenna y1 and sends the received information to the baseband apparatus y3 for processing. In the downlink direction, the baseband apparatus y3 processes information to be sent and sends it to the radio frequency apparatus y2, and the radio frequency apparatus y2 processes the received information and then sends it out by means of the antenna y1.

Optionally, the network side device y00 may further include a network interface y6, where the network interface y6 may be configured to interact information with the radio frequency apparatus y2. The interface is, for example, a common public radio interface (common public radio interface, or CPRI for short).

The network side device of the embodiment of the present invention further includes: instructions or programs stored in the memory y5 and executable on the processor y4, where the processor y4 invokes the instruction or program in the memory y5 to execute the methods performed by the sensing RAN, AMF or SF in the above method embodiment, and the same technical effect can be achieved, details of which are omitted here for brevity.

An embodiment of this application further provides a readable storage medium, where a program or instructions are stored on the readable storage medium, and when the program or instructions are executed by a processor, the various processes of the embodiment of the above sensing device registration method are implemented, and the same technical effect can be achieved, details of which are omitted here for brevity.

The processor is a processor in the UE in the embodiment described above. A readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, the chip including a processor and a communication interface, the communication interface being coupled to the processor, the processor being configured to run programs or instructions to implement the various processes of the embodiment of the sensing device registration method, and the same technical effect can be achieved, details of which are omitted here for brevity.

It should be understood that the chip referred to in this embodiment of this application may also be referred to as a system-on-chip, a system chip, a chip system, a system-on-a-chip, or the like.

It should be noted that: the terms "include", "contain", or any other variants thereof in this specification are intended to cover a non-exclusive inclusion, such that a process, method, object, or apparatus including a set of elements includes not only those elements, but also other elements that are not expressly listed or elements that are inherent to such process, method, object, or apparatus. Without more limitations, elements defined by the sentence "including one" does not exclude that there are still other same elements in the processes, methods, objects, or apparatuses including the element. Furthermore, it is to be noted that the scope of the method and apparatus in the embodiments of this application is not limited to executing the functions in the order shown or discussed, but may also include executing the functions in a substantially same manner or in the reverse order according to the functions involved, for example, the described method may be executed in an order different from the order described, and various steps may also be added, omitted, or combined. In addition, features described with reference to some examples may also be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially, or the part contributing to the prior art, may be presented in the form of a computer software product. The computer software product is stored in a storage medium (for example, ROM/RAM, a magnetic disk, or an optical disc) including several instructions to enable a UE (which may be a mobile phone, a computer, a server, an air conditioner, a network device, or the like) to execute the methods described in the various embodiments of this application.

The embodiments of this application have been described above with reference to the accompanying drawings. This application is not limited to the specific embodiments described above, and the specific embodiments described above are merely exemplary and not restrictive. Those of ordinary skill in the art may make various variations under the teaching of this application without departing from the spirit of this application and the protection scope of the claims, and such variations all fall within the protection scope of this application.

## Claims

1. A sensing device registration method, comprising:
receiving, by a sensing function SF, first sensing device registration information sent by a first device, the first sensing device registration information being used for performing sensing device registration on a first sensing device, and the first sensing device comprising at least one of a sensing user equipment UE and a sensing radio access network RAN; and
performing, by the SF according to the first sensing device registration information, sensing device registration on the first sensing device.

2. The method according to claim 1, wherein the method further comprises:
receiving, by the SF, sensing service information;
determining, by the SF according to the sensing service information, that the first sensing device is a sensing device participating in a sensing service indicated by the sensing service information; and
sending, by the SF, first sensing configuration information to the first device, the first sensing configuration information being sensing configuration information of the first sensing device.

3. The method according to claim 1 or 2, wherein the first device is any one of the following: the sensing UE, the sensing RAN, and an access and mobility management function AMF.

4. The method according to claim 2, wherein the determining, by the SF according to the sensing service information, that the first sensing device is a sensing device participating in a sensing service indicated by the sensing service information, comprises:
determining, by the SF according to the sensing service information, a sensing region for executing the sensing service;
sending, by the SF, an event exposure service request message to an AMF, the event exposure service request message comprising indication information of the sensing region;
receiving, by the SF, an event exposure response message from the AMF; and
determining, by the SF according to the event exposure response message, that a first sensing device among devices indicated by the event exposure response message is a sensing device participating in the sensing service indicated by the sensing service information.

5. The method according to claim 4, wherein a device indicated by the event exposure response message comprises at least one of the following:
a sensing device located in the sensing region;
a sensing device having a capability to provide a sensing service for the sensing region; and
a device located in the sensing region.

6. The method according to claim 2, wherein the method further comprises:
receiving, by the SF, a second sensing measurement result from a second device, the second sensing measurement result being a measurement result corresponding to the sensing service indicated by the sensing service information;
wherein the second device comprises at least one of the following: the sensing UE, the sensing RAN and an AMF.

7. The method according to claim 6, wherein the second device comprises the sensing UE, and the first sensing device comprises the sensing UE; and
the receiving, by the SF, a second sensing measurement result from a second device, comprises:
receiving, by the SF, the second sensing measurement result from the sensing UE by means of a second sensing tunnel;
wherein the second sensing tunnel is a sensing bearer or a sensing protocol data unit PDU session of the sensing UE.

8. The method according to claim 6, wherein the second device comprises the sensing RAN, the first sensing device comprises the sensing UE, and the method further comprises:
establishing, by the SF, a third sensing tunnel between the SF and the sensing RAN; and
the receiving, by the SF, a second sensing measurement result from a second device, comprises:
receiving, by the SF, the second sensing measurement result from the sensing RAN by means of the third sensing tunnel.

9. The method according to claim 1, wherein the first sensing device registration information comprises at least one of the following:
an identifier of the sensing UE;
a sensing capability of the sensing UE;
location information of the sensing UE;
an identifier of the sensing RAN;
a sensing capability of the sensing RAN; and
location information of the sensing RAN.

10. A sensing device registration method, comprising:
sending, by a sensing user equipment UE, sensing capability indication information of the sensing UE to a sensing radio access network RAN to make a network side device perform sensing device registration on the sensing UE, the sensing capability indication information of the sensing UE being used for indicating that the sensing UE has a sensing capability.

11. The method according to claim 10, wherein the sending, by a sensing UE, sensing capability indication information of the sensing UE to a sensing RAN, comprises:
sending, by the sensing UE, a registration request message to the sensing RAN, the registration request message comprising sensing capability indication information of the sensing UE.

12. The method according to claim 11, wherein the method further comprises:
receiving, by the sensing UE, a registration acceptance message, the registration acceptance message comprising information indicating that the sensing UE is permitted to perform a sensing service.

13. The method according to claim 10, wherein the method further comprises:
sending, by the sensing UE, sensing request indication information to the sensing RAN, the sensing request indication information being used for requesting to use the sensing capability which the sensing UE has.

14. The method according to claim 10, wherein the method further comprises:
receiving, by the sensing UE, sensing configuration information of the sensing UE from the sensing RAN;
executing, by the sensing UE according to the sensing configuration information of the sensing UE, first sensing measurement to obtain a first sensing measurement result; and
reporting, by the sensing UE, the first sensing measurement result.

15. The method according to claim 14, wherein the reporting, by the sensing UE, the first sensing measurement result, comprises:
sending, by the sensing UE, a first message to the sensing RAN, the first message carrying the first sensing measurement result, and the first message being a non-access stratum NAS message or an RRC message; or
sending, by the sensing UE, the first sensing measurement result to the sensing RAN by means of a first sensing tunnel, the first sensing tunnel being a sensing tunnel between the sensing UE and the sensing RAN; or
sending, by the sensing UE, the first sensing measurement result to a sensing function SF by means of a second sensing tunnel, the second sensing tunnel being a sensing tunnel between the sensing UE and the SF.

16. The method according to claim 15, wherein the method further comprises:
receiving, by the sensing UE, tunnel establishment parameters of the first sensing tunnel from an access and mobility management function AMF; and
establishing, by the sensing UE according to the tunnel establishment parameters of the first sensing tunnel, the first sensing tunnel, the first sensing tunnel being a sensing radio bearer.

17. The method according to claim 15, wherein the method further comprises:
receiving, by the sensing UE, tunnel establishment parameters of the second sensing tunnel from an AMF; and
establishing, by the sensing UE according to the tunnel establishment parameters of the second sensing tunnel, the second sensing tunnel;
wherein the second sensing tunnel comprise any one of the following: a sensing bearer and a sensing protocol data unit PDU session.

18. A sensing device registration method, comprising:
sending, by a sensing radio access network RAN, first sensing device registration information to a sensing function SF, the first sensing device registration information being used for performing sensing device registration on a first sensing device, and the first sensing device comprising at least one of a sensing user equipment UE and the sensing RAN.

19. The method according to claim 18, wherein the first sensing device comprises the sensing UE, and the method further comprises:
receiving, by the sensing RAN, a first message from an access and mobility management function AMF, the first message comprising information indicating that the sensing UE is permitted to perform a sensing service.

20. The method according to claim 18, wherein the first sensing device comprises the sensing UE, and the method further comprises:
receiving, by the sensing RAN, sensing capability indication information of the sensing UE from a third device, the sensing capability indication information of the sensing UE being used for indicating that the sensing UE has a sensing capability;
wherein the third device comprises at least one of an AMF and the sensing UE.

21. The method according to claim 18, wherein the method further comprises:
receiving, by the sensing RAN, first sensing configuration information from the SF, the first sensing configuration information being sensing configuration information of the first sensing device.

22. The method according to claim 21, wherein the first sensing device comprises the sensing UE, and the method further comprises:
sending, by the sensing RAN, sensing configuration information of the sensing UE to the sensing UE;
receiving, by the sensing RAN, a first sensing measurement result from the sensing UE; and
sending, by the sensing RAN, the first sensing measurement result to the SF.

23. The method according to claim 22, wherein the method further comprises:
establishing, by the sensing RAN, a third sensing tunnel between the sensing RAN and the SF; and
the sending, by the sensing RAN, the first sensing measurement result to the SF, comprises:
sending, by the RAN, the first sensing measurement result to the SF by means of the third sensing tunnel.

24. The method according to claim 22, wherein the first sensing device comprises the sensing RAN, and the method further comprises:
executing, by the sensing RAN according to sensing configuration information of the sensing RAN, second sensing measurement to obtain a third sensing measurement result; and
sending, by the RAN, the third sensing measurement result to the SF.

25. The method according to any one of claims 18 to 24, wherein the first sensing device registration information comprises at least one of the following:
an identifier of the sensing UE;
a sensing capability of the sensing UE;
location information of the sensing UE;
an identifier of the sensing RAN;
a sensing capability of the sensing RAN; and
location information of the sensing RAN.

26. A sensing device registration method, comprising:
sending, by an access and mobility management function AMF, first sensing device registration information to a sensing function SF, the first sensing device registration information being used for performing sensing device registration on a first sensing device, and the first sensing device comprising at least one of a sensing user equipment UE and a sensing radio access network RAN.

27. The method according to claim 26, wherein the first sensing device comprises the sensing UE, and the method further comprises:
determining, by the AMF according to first information, that the sensing UE is permitted to perform a sensing service, the first information comprising at least one of a local configuration and subscription data of the sensing UE.

28. The method according to claim 26, wherein the method further comprises:
receiving, by the AMF, first sensing capability indication information from the sensing RAN, the first sensing capability indication information being used for indicating that the first sensing device has a sensing capability.

29. The method according to claim 26, wherein the method further comprises:
receiving, by the AMF, sensing request indication information from the sensing RAN, the sensing request indication information being used for requesting to use a sensing capability which the sensing UE has.

30. The method according to claim 26, wherein the method further comprises:
receiving, by the AMF, first sensing configuration information from the SF, the first sensing configuration information being sensing configuration information of the first sensing device; and
sending, by the AMF, the first sensing configuration information to the sensing RAN.

31. The method according to claim 30, wherein the method further comprises:
receiving, by the AMF, a fourth sensing measurement result from the sensing RAN; and
sending, by the AMF, the fourth sensing measurement result to the SF;
wherein the fourth sensing measurement result comprises at least one of the following:
a sensing measurement result of sensing measurement executed by the sensing RAN according to sensing configuration information of the sensing RAN; and
a sensing measurement result of sensing measurement executed by the sensing UE according to sensing configuration information of the sensing UE.

32. The method according to any one of claims 26 to 31, wherein the first sensing device registration information comprises at least one of the following:
an identifier of the sensing UE;
a sensing capability of the sensing UE;
location information of the sensing UE;
an identifier of the sensing RAN;
a sensing capability of the sensing RAN; and
location information of the sensing RAN.

33. A sensing device registration apparatus, comprising a receiving module and a registering module,
the receiving module being configured to receive first sensing device registration information sent by a first device, the first sensing device registration information being used for performing sensing device registration on a first sensing device, and the first sensing device comprising at least one of a sensing user equipment UE and a sensing radio access network RAN; and
the registering module being configured to perform, according to the first sensing device registration information, sensing device registration on the first sensing device.

34. A sensing device registration apparatus, comprising a sending module,
the sending module being configured to send sensing capability indication information of a sensing user equipment UE to a sensing radios access network RAN to make a network side device perform sensing device registration on the sensing UE, and the sensing capability indication information of the sensing UE being used for indicating that the sensing UE has a sensing capability.

35. A sensing device registration apparatus, comprising a sending module,
the sending module being configured to send first sensing device registration information to a sensing function SF, the first sensing device registration information being used for performing sensing device registration on a first sensing device, and the first sensing device comprising at least one of a sensing user equipment UE and a sensing radio access network RAN.

36. A user equipment UE, comprising a processor, a memory, and a program or instructions stored in the memory and executable on the processor, wherein when the program or instructions are executed by the processor, steps of the sensing device registration method according to any one of claims 10 to 17 are implemented.

37. A network side device, comprising a processor, a memory, and a program or instructions stored in the memory and executable on the processor, wherein when the program or instructions are executed by the processor, steps of the sensing device registration method according to any one of claims 1 to 9 are implemented, or when the program or instructions are executed by the processor, steps of the sensing device registration method according to any one of claims 18 to 25 are implemented, or when the program or instructions are executed by the processor, steps of the sensing device registration method according to any one of claims 26 to 32 are implemented.

38. A readable storage medium, wherein a program or instructions are stored on the readable storage medium, and when the program or instructions are executed by a processor, steps of the sensing device registration method according to any one of claims 1 to 32 are implemented.
